# NEUE EUROPÄISCHE PATENTSCHRIFT

(11) **EP 3 626 634 B2**
(45) Veröffentlichungstag und Bekanntmachung des Hinweises auf die Entscheidung über den Einspruch: **17.06.2026**
(45) Hinweis auf die Patenterteilung: 25.08.2021
(21) Anmeldenummer: 19184194.9
(22) Anmeldetag: 03.07.2019
(51) Int. Cl.: B65G 47/90, B65G 54/02, B65G 61/00, B65B 21/02, B65B 21/06, B65B 21/12, B65B 35/06, B65B 57/18

(54) **HANDHABUNGS- UND/ODER VERPACKUNGSVORRICHTUNG UND VERFAHREN ZUM VERPACKEN VON ARTIKELN**
HANDLING AND/OR PACKAGING DEVICE AND METHOD FOR PACKAGING ARTICLES
DISPOSITIF DE MANIPULATION ET / OU D'EMBALLAGE ET PROCÉDÉ D'EMBALLAGE DES ARTICLES

(30) Priorität: 20.09.2018 DE 102018123193
(43) Veröffentlichungstag der Anmeldung: 25.03.2020
(73) Patentinhaber: Krones Aktiengesellschaft, 93073 Neutraubling (DE)
(72) Erfinder: KIRZINGER, Herr Johannes, 93073 Neutraubling (DE); WINZINGER, Herr Frank, 93073 Neutraubling (DE)
(74) Vertreter: Hannke Bittner & Partner mbB Regensburg

(56) Entgegenhaltungen:
- EP-A1- 1 533 234
- WO-A2-96/32323
- DD-A1- 254 175
- DE-A1- 19 628 563
- KR-B1- 101 300 385
- US-A- 5 060 455

## Beschreibung

Die vorliegende Erfindung betrifft eine Handhabungs- und/oder Verpackungsvorrichtung sowie ein Verfahren zum Verpacken von Artikeln gemäß den Merkmalen der unabhängigen Ansprüche.

Die automatisierte Bestückung von Umverpackungen mit Artikelgruppen wie etwa von Getränkekästen oder -kartons mit Getränkebehältern erfolgt normalerweise diskontinuierlich, da die Umverpackungen oder Getränkekästen für jeden Bestückungsvorgang angehalten werden müssen, auch wenn sie im übrigen Prozessverlauf mit kontinuierlicher Fördergeschwindigkeit transportiert werden. Eine solchermaßen diskontinuierlich ablaufende Bestückung von Umverpackungen mit Artikeln weist naturgemäß den Nachteil einer vergleichsweise geringen Leistung auf, da der Förderprozess der Umverpackungen oder Kästen immer wieder angehalten werden muss, um die Artikel oder Behälter dort einsetzen zu können.

Es gibt im Stand der Technik verschiedene Ansätze zur Umgehung dieser Nachteile oder zur Reduzierung der dadurch gegebenen Einschränkungen, etwa durch eine quasikontinuierliche Förderung von Umverpackungen während ihrer Bestückung mit Artikeln, was sich etwa in der WO 96/32323 oder in der GB 836 632 beschrieben findet.

Angesichts der Nachteile im Stand der Technik kann es als vorrangige Aufgabe der Erfindung angesehen werden, eine einfach aufgebaute und zuverlässig arbeitende Vorrichtung zum Verpacken von Artikeln bzw. zu deren Einsetzen ein Umverpackungen oder zum Entnehmen von Artikeln aus Umverpackungen sowie ein entsprechendes Verfahren zur Verfügung zu stellen, bei dem störende Diskontinuitäten bei der Förderung reduziert oder sogar vermieden werden können.

Die obige Aufgabe wird durch eine Handhabungs- und/oder Verpackungsvorrichtung sowie durch ein Verfahren gelöst, welche die Merkmale der jeweiligen unabhängigen Ansprüche aufweisen. Weitere vorteilhafte Ausgestaltungen werden durch die jeweiligen Unteransprüche beschrieben.

Zur Lösung der oben genannten Aufgabe schlägt die Erfindung eine Handhabungs- und/oder Verpackungsvorrichtung zur Umverpackung von Artikelgruppen vor, die eine erste Förderstrecke zum Transportieren einer Vielzahl von Artikeln im Massenstrom und/oder im Reihentransport in einer definierten und/oder im Förderverlauf sich ändernden Förderrichtung sowie eine nahe der ersten Förderstrecke befindliche und/oder parallel zu dieser verlaufende zweite Förderstrecke zum aufeinanderfolgenden Transportieren von Umverpackungen aufweist, welche Umverpackungen die für eine Aufnahme jeweils mindestens einer, aus mehreren Artikeln gebildeten Artikelgruppe vorgesehen und vorbereitet sind. In diesem Zusammenhang sei einerseits darauf hingewiesen, dass die obige Definition des Transports der Artikel im Massenstrom oder in Reihen auch den intermittierenden Transport von zuvor separierten Artikelgruppen umfasst. So können die Artikel bspw. in Gruppen eingeteilt und diese Gruppen zumindest geringfügig von nachfolgenden Artikeln separiert werden, so dass diese Gruppen anschließend in die Umverpackung überführt werden können.

In diesem Zusammenhang sei weiterhin darauf hingewiesen, dass die im vorliegenden Beschreibungszusammenhang generalisierend als Umverpackungen bezeichneten Verpackungen durch diverse Behältnisse gebildet sein können, die grundsätzlich zur Aufnahme der Artikel geeignet sein müssen. In der Praxis können die Umverpackungen bspw. durch oben offene Kartons, Trays, Flaschenkästen, Getränkekisten usw. gebildet sein, in welche die Artikel von oben her mittels der weiter unten im Detail erläuterten Handhabungseinrichtung mit ihrem mindestens einen steuerbaren Greiferkopf eingesetzt oder entnommen werden können. Alternativ können die Artikel in einem Winkel oder seitlich in die Umverpackungen eingesetzt werden. Wenn zudem verallgemeinernd von Artikeln die Rede ist, so sind dies massenstromfähige Stückgüter, deren weitere Handhabung und deren Transport und/oder Versand typischerweise mittels Umverpackungen erfolgt. So können die Artikel insbesondere durch Behältnisse, Getränkebehältnisse, Flaschen, Dosen, Getränkekartons (insbesondere bei Milch oder bei anderen Lebensmitteln) o. dgl. gebildet sein, die mittels der Umverpackungen zu stapel- und/oder palettierbaren Verpackungseinheiten zusammengefasst werden können.

Weiterhin umfasst die Handhabungs- und/oder Verpackungsvorrichtung eine den Förderstrecken zugeordnete Handhabungseinrichtung mit wenigstens einem Greiferkopf, der zur gleichzeitigen Aufnahme und Erfassung jeweils einer Artikelgruppe von der ersten Förderstrecke zu deren Überführung zur zweiten Förderstrecke und zum Einsetzen der Artikelgruppe in eine der dort beförderten Umverpackungen oder zur gleichzeitigen Aufnahme und Erfassung jeweils einer Artikelgruppe aus den auf der zweiten Förderstrecken beförderten Umverpackungen, zu deren Überführung zur ersten Förderstrecke sowie zum Aufsetzen der Artikelgruppe auf die erste Förderstrecke vorgesehen und ausgebildet ist.

Der Handhabungseinrichtung kann zudem ein Einführrahmen zugeordnet sein, um das Einsetzen der Artikel bzw. der Artikelgruppen in die Umverpackungen mittels des Greiferkopfes zu erleichtern und/oder zu vereinfachen.

Wenn im vorliegenden Zusammenhang von einer Handhabungseinrichtung mit mindestens einem Greiferkopf gesprochen wird, so kann dies bspw. ein Portalroboter, ein Mehrachsroboter, ein Parallelkinematik-Roboter oder eine andere geeignete Handhabungseinrichtung sein, die zwischen den wenigstens zwei Förderstrecken zur Überführung von gleichzeitig mehreren Artikeln zu den Umverpackungen oder zur ersten Förderstrecke hin- und herbewegt und dabei gleichzeitig nach Bedarf angehoben und abgesenkt werden kann. Zusätzlich kann ein Schwenken oder Drehen der Artikel von der Handhabungsvorrichtung durchgeführt werden.

An einem beweglichen Werkzeugkopf dieser Handhabungseinrichtung befindet sich wenigstens ein steuerbarer Greiferkopf zur gleichzeitigen Aufnahme mehrerer Artikel wie bspw. Getränkebehältern oder Flaschen, der bspw. mit steuerbaren Sauggreifern oder mit steuerbaren Greiftulpen o. dgl. ausgestattet sein kann, mit denen die Artikel in deren Hals- oder Kopfbereich erfasst und für die Überführung in die Umverpackung oder zur ersten Förderstrecke sicher gehalten sowie zum Absetzen in der Umverpackung oder auf die erste Förderstrecke zuverlässig freigegeben werden können. Ein anderer Ausdruck ist "Packtulpe". Alternativ kann es sich auch um Klammern handeln, die die Artikel seitlich greifen. Sofern die Handhabungseinrichtung mit nur einem Greiferkopf ausgestattet ist, kann normalerweise gleichzeitig eine Umverpackung mit einer definierten Anzahl von Artikeln, Getränkebehältern oder Flaschen bestückt werden, bspw. mit einer Anzahl von im Rechteckverbund angeordneten Artikeln von insgesamt zwanzig oder vierundzwanzig oder mehr Artikeln. Wahlweise kann die Handhabungseinrichtung jedoch auch mit zwei oder drei gleichartigen Greiferköpfen ausgestattet sein, die es erlauben, eine entsprechend größere Anzahl von Artikeln gleichzeitig zu erfassen und bspw. in zwei oder drei hintereinander beförderte Umverpackungen abzusetzen. Durch die solchermaßen geschaffene Möglichkeit der gleichzeitigen Bestückung mehrerer Umverpackungen mit jeweiligen Artikelgruppen ist ein entsprechend hoher Durchsatz bei der Bestückung von Umverpackungen mit Artikeln möglich. Gleiches gilt natürlich auf für das Entnehmen der Artikelgruppe aus den Umverpackungen und das Überführungen sowie Aufsetzen auf die erste Förderstrecke.

Der zweiten Förderstrecke, auf welcher insbesondere die zu bestückenden oder entleerenden Umverpackungen befördert werden, ist mindestens ein, insbesondere aktivierbares und/oder steuerbar ausgebildetes, Rückhalteelement zugeordnet, wobei mittels des mindestens einen Rückhalteelements zumindest zwei benachbarte oder in Transportrichtung aufeinanderfolgende Umverpackungen zumindest phasenweise vor oder während des Bestückens der Umverpackungen mit der Artikelgruppe oder zumindest phasenweise vor oder während der Entnahme der Artikelgruppe aus den Umverpackungen miteinander gekoppelt sind bzw. koppelbar sind. Die zumindest zwei gekoppelten Umverpackungen können auf der zweiten Förderstrecke relativ gegenüber der Transportgeschwindigkeit der zweiten Förderstrecke bewegt werden.

Es kann vorgesehen sein, dass die zumindest zwei gekoppelten Umverpackungen auf der zweiten Förderstrecke insbesondere gegenüber vorauslaufenden und/oder bereits mit Artikeln bestückte oder entleerte Umverpackungen zurückgehalten und/oder gegenüber der Transportgeschwindigkeit der zweiten Förderstrecke relativ bewegt, insbesondere verzögert werden.

Erfindungsgemäß ist zumindest einer Längsseite der zweiten Förderstrecke und parallel zu dieser verlaufend eine Führungsschiene zugeordnet, an dem das mindestens eine Rückhalteelement entlang wenigstens einer Längsseite der zweiten Förderstrecke verschiebbar und/oder insbesondere motorisch verfahrbar geführt ist.

Gemäß einem weiteren Ausführungsbeispiel kann beiden Längsseiten der zweiten Förderstrecke und parallel zu dieser verlaufend jeweils eine Führungsschiene zugeordnet sein, an dem jeweils das mindestens eine Rückhalteelement entlang beiden Längsseiten der zweiten Förderstrecke verschiebbar und/oder insbesondere motorisch verfahrbar geführt ist. Die auf beiden Längsseiten der zweiten Förderstrecke vorgesehenen Rückhalteelemente können entlang der Führungsschienen zueinander synchron verschiebbar und/oder verfahrbar geführt sein und/oder mindestens zwei zu bestückende oder zu entleerende Umverpackungen koppeln.

Die zumindest an einer Längsseite der zweiten Führungsschiene und parallel zu dieser verlaufenden Führungsschiene kann linear oder umlaufend ausgebildet sein, entlang welcher jeweils das mindestens eine Rückhalteelement verschiebbar und/oder verfahrbar geführt ist. Insbesondere kann das mindestens eine Rückhalteelement in oder entgegen der Transportrichtung der zweiten Führungsschiene verschiebbar und/oder insbesondere motorisch verfahrbar geführt sein. Unter "linear" ist im vorliegenden Fall zu verstehen, dass die zumindest eine Führungsschiene zwei Enden aufweist.

Das mindestens eine Rückhalteelement kann entlang der Führungsschienen magnetisch, pneumatisch, hydraulisch oder elektrisch verschiebbar oder verfahrbar geführt sein.

Bei der erfindungsgemäßen Handhabungs- und/oder Verpackungsvorrichtung kann vorgesehen sein, dass das oben erwähnte mindestens eine Rückhalteelement durch eine verschwenkbare Klappe oder durch ein verschwenkbares Klappenpaar oder dergleichen ausgebildet ist, welches bei verschwenkter Position die zumindest zwei zu bestückenden oder zu entleerenden Umverpackungen insbesondere von oben umgreift und diese zumindest zwei Umverpackungen miteinander sowie mit dem an der zumindest einen Führungsschiene geführten Rückhalteelement koppelt, so dass die zumindest zwei gekoppelten Umverpackungen gegenüber der Transportgeschwindigkeit der zweiten Förderstrecke abgebremst und/oder zurückgehalten werden können bzw. abbremsbar und/oder zurückhaltbar sind.

Das mindestens eine Rückhalteelement, insbesondere die verschwenkbare Klappe oder das verschwenkbare Klappenpaar, können eine Schwenkachse umfassen, welche horizontal und im Wesentlichen parallel zur Transportrichtung angeordnet ist.

Insbesondere kann die verschwenkbare Klappe oder das verschwenkbare Klappenpaar eine Aufnahme bereitstellen, welche U-förmig oder V-förmig oder dergleichen ausgebildet ist. Die Aufnahme kann insbesondere die sich berührenden oder zugewandten Fläche bzw. Stirnseiten der mindestens zwei zu bestückenden oder zu entleerenden Umverpackungen durch eine Schwenkbewegung der Klappe oder des Klappenpaares aufnehmen oder umgreifen und dadurch die mindestens zwei zu bestückenden oder zu entleerenden Umverpackungen miteinander koppeln. Bei derartiger Ausführungsform kann zum Verschwenken der mindestens einen Klappe oder des Klappenpaares ein pneumatischer, elektrischer oder hydraulischer Zylinder vorgesehen sein. Alternativ kann für das Verschwenken eine Führungskurve vorhanden sein, an welcher ein an der Klappe angeordneter Nocken steuerbar entlangfährt.

Alternativ kann vorgesehen sein, dass das mindestens eine Rückhalteelement durch einen Rückhaltestab oder durch ein Paar von Rückhaltestäben gebildet ist, wobei der Rückhaltestab oder jeder der Rückhaltestäbe in ausgefahrener Stellung senkrecht in jeweils eine Öffnung der zu mindestens zwei bestückenden oder zu entleerenden Umverpackungen eingreift und dadurch diese zumindest zwei Umverpackungen miteinander koppelt, so dass die zumindest zwei gekoppelten Umverpackungen gegenüber der Transportgeschwindigkeit der zweiten Förderstrecke abgebremst und/oder zurückgehalten werden können bzw. abbremsbar und/oder zurückhaltbar sind.

Vorzugsweise kann der Rückhaltestab oder das Rückhaltestäbepaar eine Außenmantelfläche mit zylindrischer oder kantiger Form dergleichen umfassen. Die Zustellbewegung bzw. das Verfahren des Rückhaltestabs kann bspw. mittels eines pneumatischen, elektrischen oder hydraulischen Zylinders erfolgen. Alternativ kann für die Zustellbewegung bzw. das Verfahren des Rückhaltestabs eine Führungskurve vorhanden sein, an welcher ein am Rückhaltestab angeordneter Nocken steuerbar entlangfährt.

Alternativ kann der verfahrbare Rückhaltestab oder das Rückhaltestäbepaar an seinem freien Ende eine Aufnahme umfassen, welche gabelförmig, insbesondere U-förmig oder V-förmig oder dergleichen, ausgebildet ist. Die Aufnahme kann insbesondere die sich berührenden oder zugewandten Flächen bzw. Stirnseiten der mindestens zwei zu bestückenden oder zu entleerenden Umverpackungen durch eine Zustellbewegung bzw. durch ein Verfahren des Rückhaltestabes insbesondere seitlich aufnehmen, so dass dadurch die mindestens zwei zu bestückenden oder zu entleerenden Umverpackungen gekoppelt werden.

Insbesondere kann vorgesehen sein, dass das mindestens eine Rückhaltelement in Transportrichtung und/oder entgegen der Transportrichtung der zweiten Förderstrecke verschiebbar und/oder verfahrbar geführt ist. Insbesondere können bei Ausgestaltung des mindestens einen Rückhalteelements als Klappenpaar oder als Rückhaltestäbepaar diese auch unabhängig voneinander entlang der zweiten Förderstrecke in und/oder entgegen der Transportrichtung der zweiten Förderstrecke verschoben und/oder verfahren werden.

Weiter kann der Handhabungs- und/oder Verpackungsvorrichtung wenigstens eine Positionserfassungseinrichtung zur Erkennung einer Position einer zu bestückenden oder zu entleerenden Umverpackung und/oder zur Erfassung der Fördergeschwindigkeit dieser Umverpackung zugeordnet sein, wobei insbesondere in Abhängigkeit von den erfassten Signalen ein Ansteuerungssignal zum Koppeln der mindestens zwei Umverpackungen erzeugbar und/oder generierbar ist.

Besonders vorteilhaft kann die Positionserfassungseinrichtung durch einen optischen Sensor oder durch einen Ultraschallsensor gebildet sein, der im Wesentlichen zumindest eine Vorderkante oder einen vorderen Bereich einer jeweils zuvorderst auf der zweiten Förderstrecke befindlichen und/oder für eine Bestückung mit Artikeln bereitstehenden oder beförderten Umverpackung oder für eine Entnahme von Artikeln aus den Umverpackungen erfasst und entsprechende Positionsdaten liefert. Ein solcher optischer Sensor oder Ultraschallsensor, der entlang der Förderrichtung der Umverpackungen hin- und herbewegt werden und solchermaßen jede Vorderkante einer zuvorderst in der Reihe der hintereinander beförderten Umverpackungen erfassen kann, kann auf einfache Weise sehr zuverlässige Positionsdaten der Umverpackungen liefern, ohne dass bspw. ein Kamerabild o. dgl. Daten analysiert werden müssten, was wesentlich aufwändiger wäre als eine relativ einfache Kantenerkennung oder Hell-Dunkel-Erkennung, wie es durch die erfindungsgemäß vorgesehene Positionserfassungseinrichtung ermöglicht ist. Bereits diese vergleichsweise einfache Sensortechnik ermöglicht eine sehr präzise Positionssteuerung der Handhabungseinrichtung mit dem an den Greifern geführten Artikeln, wenn diese möglichst exakt an ihre vorgesehenen Ablagepositionen in den Umverpackungen eingesetzt werden sollen. Eine Kameraauswertung der Position der Umverpackungen auf der zweiten Förderstrecke ist jedoch nicht ausgeschlossen.

Insbesondere kann vorgesehen sein, dass die Aufnahmen des Greiferkopfes relativ zueinander in einer horizontalen Richtung, bevorzugt zwei horizontalen Richtungen relativ zueinander mittels eines oder zwei (für jede Richtung einer) am Greiferkopf angeordneten Antrieb(s)en bewegbar sind. Bei einem Antrieb oder beiden Antrieben kann es sich jeweils um einen steuerbaren Elektromotor handeln, was den Vorteil mit sich bringt, dass unterschiedliche Formate der Umverpackung und/oder der Artikel durch eine motorische Umstellung verarbeitet werden können.

Zusätzlich kann jede einzelne Aufnahme oder nur die äußeren Aufnahmen individuell durch einen Antrieb gesteuert drehbar an dem Greiferkopf angeordnet sein, um die Artikel vor dem Einsetzen relativ zur Umverpackung auszurichten, und zwar insbesondere in der Art, dass bestimmte Merkmale der Artikel, wie z.B. ein Etikett nach außen relativ zur Umverpackung ausgerichtet sind. Hierfür können entsprechende Sensoren vorhanden sein, um eine Ausrichtung zu erkennen.

Ebenso wie die Aufnahmen relativ zum Greiferkopf können im Fall von mehreren Greiferköpfen diese relativ zur Handhabungsvorrichtung relativ zueinander ausgerichtet / verschoben werden.

Weiter kann eine Steuerung vorhanden sein, durch welche die Aufnahmen bzw. deren Antriebe zweitweise relativ zur Geschwindigkeit der ersten Förderstrecke gesehen mit im Wesentlichen gleicher Geschwindigkeit bewegt werden, um die Artikel während ihres Transports aufnehmen zu können.

Weiterhin kann es sein, dass durch die Steuerung die Aufnahmen bzw. deren Antriebe zeitweise relativ zur Geschwindigkeit der zweiten Förderstrecke und/oder zur Geschwindigkeit der mit den Umverpackungen in Kontakt stehenden Rückhalteelementen gesehen mit im Wesentlichen gleicher Geschwindigkeit bewegt werden, um die Artikel während des Transports der Umverpackungen in diese einsetzen zu können.

Die Bewegung der Aufnahmen kann in beiden Fällen durch eine Bewegung der Aufnahme relativ zum Greiferkopf und/oder eine Bewegung des Greiferkopfs relativ zur Handhabungseinrichtung und/oder durch eine Bewegung der Handhabungsvorrichtung selbst und/oder durch eine Bewegung des Gestells der Handhabungsvorrichtung relativ zu einem Hallenboden durchgeführt werden.

Es ist möglich, dass ein Rückhalteelement durch einen Langstator-Linearmotor angetrieben wird, welcher aus einer Vielzahl von einzelnen Elektromagneten besteht. An den Rückhalteelementen befinden sich bevorzugt auch Magnete, welche mit den Elektromagneten zusammenwirken. Wird die Führung bzw. Schiene nicht durch den Antrieb selbst gebildet, kann zusätzlich eine Schiene oder Führung vorhanden sein, an welcher Führungselemente der Rückhalteelemente angeordnet sind. Bei den Führungselementen kann es sich beispielsweise um Rollen handeln.

Eine Schiene oder Führung für die Rückhalteelemente kann insbesondere entlang der Transportstrecke bereichsweise gekrümmt sein, so dass durch die Führung oder Schiene Bewegungen der Rückhalteelemente in zwei, insbesondere drei, aufeinander senkrecht stehende Richtungen bzw. Komponenten davon ermöglicht werden. Auf diese Weise ist beispielsweise eine Bewegung mit vertikaler Richtungskomponente möglich, um beispielsweise von oben in Öffnungen der Umverpackungen eintauchen zu können.

Zur Lösung der genannten Aufgabe schlägt die Erfindung neben der in verschiedenen Ausführungsvarianten beschriebenen Handhabungs- und/oder Verpackungsvorrichtung weiterhin ein Verfahren zum Überführen von im Massenstrom und/oder im Reihentransport und/oder gruppenweise beförderten Artikeln in kontinuierlich oder intermittierend entlang einer Förderstrecke bewegte Umverpackungen, wobei die Umverpackungen jeweils mindestens eine aus mehreren Artikeln gebildete Artikelgruppe aufnehmen können, oder zum Überführen von in kontinuierlich und intermittierend entlang einer Förderstrecke bewegte und in Umverpackungen eingesetzte Artikelgruppen auf eine weitere Förderstrecke zum Massenstrom- oder Reihentransport vor. Dabei wird jeweils mindestens eine Artikelgruppe aus dem Massenstrom und/oder dem Reihentransport mittels wenigstens eines Greiferkopfes erfasst und herausgehoben und von oben in eine der sich neben dem Massenstrom oder dem Reihentransport der Artikel entlang der Förderstrecke bewegenden Umverpackungen eingesetzt, wonach die mit einer Artikelgruppe bestückten Umverpackungen abtransportiert werden, oder es wird jeweils mindestens eine Artikelgruppe mittels wenigstens eines Greiferkopfes aus den kontinuierlich oder intermittierend entlang einer Förderstrecke bewegten Umverpackungen erfasst und herausgehoben und von oben auf die weitere Förderstrecke zum Massenstrom- oder Reihentransport aufgesetzt. Das Verfahren sieht vor, dass die mit einer Artikelgruppe mindestens zwei zu bestückenden oder zu entleerenden Umverpackungen zumindest phasenweise vor oder während des Bestückens der Umverpackungen mit der Artikelgruppe oder der Entnahme der Artikelgruppe aus den Umverpackungen miteinander gekoppelt werden, wobei die zumindest zwei gekoppelten Umverpackungen auf der zweiten Förderstrecke relativ gegenüber der Transportgeschwindigkeit der zweiten Förderstrecke bewegt werden können.

Beim Verfahren kann vorgesehen sein, dass die miteinander gekoppelten Umverpackungen insbesondere gegenüber vorauslaufenden und/oder bereits mit Artikeln bestückten oder entleerten Umverpackungen zurückgehalten und/oder gegenüber der Transportgeschwindigkeit der vorauslaufenden Umverpackungen verzögert werden.

Das Verfahren kann generell darauf verzichten, dass die Umverpackungen während des Einsetzens der Artikel zum Stillstand kommen müssen, wodurch eine hohe Verarbeitungsgeschwindigkeit und ein entsprechend hoher Durchsatz erzielt werden kann. Der Greiferkopf wird nach dem Einsetzen einer Artikelgruppe in eine Umverpackung jeweils zum Massenstrom und/oder Reihentransport der Artikel zurückbewegt, um daraus weitere Artikelgruppen aufzunehmen, oder nach dem Entnehmen einer Artikelgruppe aus den Umverpackungen und Überführen der Artikelgruppe zum Massenstrom und/oder Reihentransport zu den entlang einer Förderstrecke beförderten Umverpackungen zurückbewegt, um aus diesen weitere Artikelgruppen zu entnehmen. Außerdem kann das Verfahren vorsehen, dass der wenigstens eine Greiferkopf der Handhabungseinrichtung nach der Aufnahme einer Artikelgruppe zumindest während des Einsetzens der Artikelgruppe in die Umverpackung oder während der Entnahme der Artikelgruppe aus der Umverpackung annähernd mit derselben Transportgeschwindigkeit wie die auf der Förderstrecke bewegten Umverpackungen parallel zur und/oder entlang der Förderstrecke bewegt wird. Wahlweise kann das Verfahren vorsehen, dass gleichzeitig mehrere Umverpackungen mittels mehrteiligen Greiferköpfen mit jeweiligen Artikelgruppen bestückt oder entleert werden, wobei die zwei, drei oder mehr Greiferköpfe vorzugsweise jeweils mit einer Handhabungseinrichtung gekoppelt oder an dieser aufgehängt sind.

Rein vorsorglich sei an dieser Stelle darauf hingewiesen, dass der Begriff der definierten und/oder sich im Förderlauf ändernden Förderrichtung wahlweise langgestreckte Förderabschnitte oder Umlenkungen in den Förderabschnitten meint und umfassen soll, was bspw. auch T-förmige Umlenkungen, Kurvenverläufe etc. mit einschließt, entlang derer die Artikel befördert werden können, um schließlich mittels der oben erwähnten Handhabungseinrichtung in die Umverpackungen eingesetzt oder aus dem Umverpackungen entnommen zu werden.

Das Verfahren kann vorsehen, dass das mindestens eine Rückhaltelement zumindest phasenweise mit der Transportgeschwindigkeit entlang der zweiten Förderstrecke mitbewegt wird oder gegenüber dieser mit reduzierter Vorschubgeschwindigkeit mitbewegt wird, wodurch die zumindest zwei gekoppelten Umverpackungen gegenüber der Transportgeschwindigkeit der zweiten Förderstrecke verzögert werden. Das Koppeln und damit das Zurückhalten und Verzögern von mindestens zwei zu bestückenden oder zu entleerenden Umverpackungen kann bspw. mittels mindestens eines Rückhalteelements, insbesondere mittels einer verschwenkbaren Klappe oder verschwenkbaren Klappenpaares, erfolgen, wobei das mindestens eine Rückhalteelement die mindestens zwei zu bestückenden oder zu entleerenden Umverpackungen insbesondere von oben umgreift und diese miteinander koppelt.

Alternativ kann vorgesehen sein, dass das Koppeln und damit das Zurückhalten und Verzögern von mindestens zwei zu bestückenden oder zu entleerenden Umverpackungen mittels mindestens eines Rückhalteelements, insbesondere mittels eines Rückhaltestabs oder mittels eines Paar von Rückhaltestäben erfolgt, welche zum Koppeln von mindestens zwei Umverpackungen senkrecht zur Transportrichtung der Umverpackungen ausgefahren werden und seitlich in Öffnungen der Umverpackungen eingreifen.

Es ist gemäß der Erfindung vorgesehen, dass das mindestens eine Rückhaltelement in Transportrichtung und/oder entgegen der Transportrichtung der zweiten Förderstrecke verschiebbar oder verfahrbar ist.

Beim Transport der Umverpackungen auf der zweiten Förderstrecke kann es vorkommen, dass die Umverpackungen in Transportrichtung nicht unmittelbar hintereinander, sondern in Transportrichtung versetzt zueinander befördert werden. Um das Einsetzen der mindestens einen Artikelgruppe in die Umverpackungen oder das Entnehmen der mindestens einen Artikelgruppe aus den Umverpackungen zu erleichtern, kann das Verfahren vorsehen, dass durch das Koppeln die auf der zweiten Förderstrecke beförderten Umverpackungen für das Bestücken mit mindestens einer Artikelgruppe oder Entnehmen von mindestens einer Artikelgruppe aus den Umverpackungen zentriert und ausgerichtet werden.

Zudem kann vorgesehen sein, dass mittels wenigstens einer der zweiten Förderstrecke zugeordneten Positionserfassungseinrichtung eine Position einer zu bestückenden oder zu entleerenden Umverpackung erkannt und/oder eine Fördergeschwindigkeit dieser Umverpackung erfasst wird, wobei insbesondere in Abhängigkeit von den erfassten Signalen ein Ansteuerungssignal zum Koppeln der mindestens zwei Umverpackungen erzeugt und/oder generiert wird.

Außerdem können Ausgangssignale der Positionserfassungseinrichtung verarbeitet und hinsichtlich einer Ansteuerung der Handhabungseinrichtung zumindest beim Einsetzten einer Artikelgruppe in die auf der zweiten Förderstrecke beförderte Umverpackung oder beim Entnehmen einer Artikelgruppe aus den auf der zweiten Förderstrecke beförderten Umverpackungen und/oder hinsichtlich einer Ansteuerung der Förderstrecke zum Positionieren mindestens einer weiteren mit Artikeln zu bestückenden Umverpackung oder zu entleerenden Umverpackungen ausgewertet werden.

Bei dem Verfahren kann vorzugsweise vorgesehen sein, dass die wenigstens eine Positionserfassungseinrichtung parallel zur zweiten Förderstrecke bewegt und/oder zumindest temporär annähernd in Fördergeschwindigkeit der Umverpackungen mit diesen mitbewegt wird. Außerdem kann vorgesehen sein, dass die Positionserfassungseinrichtung ungefähr parallel zur zweiten Förderstrecke in einer Förderrichtung der Umverpackungen oder entgegen der Förderrichtung bewegbar ist, was bspw. durch einen motorischen Antrieb und durch eine Führung mit einem parallel zur Förderrichtung der Umverpackungen angeordneten Führungsschlitten ermöglicht sein kann.

Es sei an dieser Stelle ergänzend darauf hingewiesen, dass alle Aspekte und Ausführungsvarianten, die im Zusammenhang mit der erfindungsgemäßen Handhabung- und/oder Verpackungsvorrichtung erläutert wurden, gleichermaßen Teilaspekte des erfindungsgemäßen Verfahrens betreffen oder sein können. Wenn daher an einer Stelle bei der Beschreibung oder auch bei den Anspruchsdefinitionen zur erfindungsgemäßen Handhabung- und/oder Verpackungsvorrichtung von bestimmten Aspekten und/oder Zusammenhängen und/oder Wirkungen die Rede ist, so gilt dies gleichermaßen für das erfindungsgemäße Verfahren. In umgekehrter Weise gilt dasselbe, so dass auch alle Aspekte und Ausführungsvarianten, die im Zusammenhang mit dem erfindungsgemäßen Verfahren erläutert wurden, gleichermaßen Teilaspekte der erfindungsgemäßen Handhabung- und/oder Verpackungsvorrichtung betreffen oder sein können. Wenn daher an einer Stelle bei der Beschreibung oder auch bei den Anspruchsdefinitionen zum erfindungsgemäßen Verfahren von bestimmten Aspekten und/oder Zusammenhängen und/oder Wirkungen die Rede ist, so gilt dies gleichermaßen für die erfindungsgemäße Handhabung- und/oder Verpackungsvorrichtung.

Die nachfolgenden Ausführungen fassen nochmal einige Aspekte der zuvor bereits in verschiedenen Ausführungsvarianten erläuterten Erfindung zusammen, konkretisieren einige Aspekte, sollen jedoch nicht im Widerspruch zu den bereits gemachten Ausführungen gesehen werden, sondern in Zusammenschau, bei Zweifeln ggf. als speziellere Ausführungsvarianten und/oder Abwandlungen. So kann, wie bereits oben mehrfach erwähnt, die erfindungsgemäße Handhabung- und/oder Verpackungsvorrichtung insbesondere der Umverpackung und/oder Zusammenfassung von Artikelgruppen wie etwa Getränkebehälter-Gruppierungen oder anderen Packeinheiten dienen. Hierzu können die in die Umverpackungen zu überführenden Artikel insbesondere von oben in die Umverpackungen eingeführt werden, wobei diese Umverpackungen insbesondere zur oberseitigen Aufnahme einer definierten Anzahl von regelmäßig angeordneten bzw. passend gruppierten Artikeln geeignet und vorbereitet sind.

Die hier nur in groben Zügen angedeutete Handhabung- und/oder Verpackungsvorrichtung umfasst in aller Regel eine erste Förderstrecke zum Transportieren einer Vielzahl von aufrecht stehenden Artikeln, die bspw. durch aufrecht stehende Getränkebehälter gebildet sein können. Die Artikel oder Getränkebehälter werden im Massenstrom und/oder im Reihentransport oder auch nach Gruppierung in gruppierten Anordnungen in einer definierten Transportrichtung, die zur Vorrichtung hinführt, transportiert. Zudem umfasst die Vorrichtung vorzugsweise eine nahe der ersten Förderstrecke befindliche und bspw. parallel zu dieser verlaufende zweite Förderstrecke zum aufeinanderfolgenden Transportieren von Umverpackungen, die bspw. durch Kartons oder Getränkekästen o. dgl. gebildet sein können, und die als Umverpackungen für die Aufnahme jeweils mindestens einer, aus mehreren Artikeln gebildeten Artikelgruppe vorgesehen und vorbereitet sind.

Üblicherweise bzw. bei den meisten Ausführungsvarianten der erfindungsgemäßen Vorrichtung werden die Umverpackungen auf der zweiten Förderstrecke in derselben Transportrichtung zur Vorrichtung bewegt wie die Artikel auf der ersten Förderstrecke. Diese Ausrichtung der beiden Förderstrecken zueinander ist jedoch nicht unbedingt zwingend, sondern kann in der Praxis bedarfsweise auch variieren, so dass nichtparallele Transportrichtungen der beiden Förderstrecken für die Artikel bzw. für die Umverpackungen ebenso denkbar und in der Praxis problemlos handhabbar sind. Im Folgenden soll jedoch die exakte Anordnung der Förderstrecken nicht näher interessieren, da grundsätzlich unterschiedliche Anordnungen möglich sind, die sich u.a. auch nach den zur Verfügung stehenden Platzverhältnissen zur Aufstellung der Maschine oder Vorrichtung richten.

Weiterhin umfasst die hier beispielhaft erläuterte Handhabungs- und/oder Verpackungsvorrichtung eine den beiden Förderstrecken räumlich und funktionell gleichermaßen zugeordnete Handhabungseinrichtung mit einem hier nicht näher konkretisierten Greiferkopf oder mehreren parallel ansteuerbaren Greiferköpfen, der bzw. die zur gleichzeitigen Aufnahme und Erfassung jeweils einer Artikelgruppe mit jedem vorhandenen Greiferkopf von der ersten Förderstrecke und zu deren Überführung zur zweiten Förderstrecke innerhalb der Vorrichtung und zum Einsetzen der Artikelgruppe, d.h. bspw. der Gruppe von Getränkebehältern, in eine der dort beförderten Umverpackungen vorgesehen sind.

Die Handhabungseinrichtung mit mindestens einem Greiferkopf oder mit mehreren annähernd synchron beweglichen und steuerbaren Greiferköpfen kann bspw. durch einen Portalroboter, einen Mehrachsroboter, einen Parallelkinematik-Roboter oder eine andere geeignete Handhabungseinrichtung gebildet sein, deren Greiferkopf oder deren Greiferköpfe zwischen den beiden Förderstrecken zur Überführung von gleichzeitig mehreren Artikeln zu den in paralleler Transportrichtung bewegten Umverpackungen hin- und herbewegt und dabei gleichzeitig nach Bedarf angehoben und abgesenkt werden können.

Der typischerweise an einem beweglichen Werkzeugkopf der Handhabungseinrichtung befindliche steuerbare Greiferkopf oder die mehreren steuerbaren Greiferköpfe dienen der gleichzeitigen Aufnahme mehrerer Artikel bzw. der Artikelgruppe wie bspw. Getränkebehältern oder Flaschen. Zu diesem Zweck ist der Greiferkopf oder sind die Greiferköpfe etwa mit steuerbaren Sauggreifern oder mit steuerbaren Greiftulpen o. dgl. ausgestattet, mit denen die Artikel in deren Hals- oder Kopfbereich erfasst und für die Überführung und das annähernd senkrechte Einfügen in die oben offenen Umverpackungen (z.B. Getränkekästen) sicher gehalten sowie zum Absetzen in der hierfür jeweils vorgesehenen Umverpackung zuverlässig freigegeben werden können.

Sofern die Handhabungseinrichtung in einer einfachsten Ausstattungsvariante mit nur einem Greiferkopf ausgestattet ist, kann normalerweise gleichzeitig eine Umverpackung mit einer definierten Anzahl von Artikeln bzw. einer Artikelgruppe bestückt werden, bspw. mit einer Anzahl von im Rechteckverbund angeordneten Artikeln von insgesamt zwanzig oder vierundzwanzig oder mehr Artikeln. Vorzugsweise kann die Handhabungseinrichtung jedoch auch mit zwei oder drei gleichartigen Greiferköpfen ausgestattet sein, die es erlauben, eine entsprechend größere Anzahl von Artikeln gleichzeitig zu erfassen und bspw. in zwei oder drei hintereinander beförderte Umverpackungen abzusetzen. Durch die solchermaßen geschaffene Möglichkeit der gleichzeitigen Bestückung mehrerer Umverpackungen mit jeweiligen Gruppen von Artikeln ist ein entsprechend hoher Durchsatz bei der Bestückung von Umverpackungen mit Artikeln möglich.

Zugleich kann der Handhabungseinrichtung bspw. ein geeigneter Einführrahmen zugeordnet sein, um das Einsetzen der Artikelgruppe bzw. der Artikel mittels der Greiferköpfen bei deren Absenkvorgang zu erleichtern und/oder zu vereinfachen.

Weiterhin kann der Vorrichtung eine aus ihr in Verlängerung der Transportrichtung herausführende bzw. sich fortsetzende zweite Förderstrecke zugeordnet sein, wobei die Transportrichtung der verlängerten zweiten Förderstrecke zur Abförderung der mit Artikeln bestückten Umverpackungen für deren weitere Handhabung wie etwa Palettierung unverändert sein kann. Normalerweise ist der aus der Vorrichtung herausführende Abschnitt der zweiten Förderstrecke die Fortsetzung oder oben erwähnten Zuführ-Förderstrecke, da die Umverpackungen bei ihrer Bestückung mit Artikeln oder nach ihrer Bestückung mit den Artikeln nicht von der zweiten Förderstrecke heruntergenommen oder entnommen werden müssen.

Es sei an dieser Stelle darauf hingewiesen, dass das als unverzichtbarer Bestandteil der vorliegenden Erfindung anzusehende und oben bereits mehrfach erläuterte Rückhaltelement, welches normalerweise parallel zur zweiten Förderstrecke verschiebbar oder verfahrbar ist, um die mit einer Artikelgruppe zu bestückenden Umverpackungen auf der zweiten Förderstrecke zu koppeln, einen steuerbaren Teil der erfindungsgemäßen Handhabungs- und/oder Verpackungsvorrichtung bildet. Das Rückhalteelement, seine Anordnung und genauere Funktion werden anhand der nachfolgenden Beschreibungspassagen beispielhaft und in weiteren Details erläutert.

Nachfolgend werden einige aufeinanderfolgende Prozessschritte erläutert, die für die Bestückung von ununterbrochen in Reihe beförderten Umverpackungen mit jeweils einer Gruppe von insgesamt z.B. zwanzig oder vierundzwanzig oder einer anderen sinnvollen Anzahl an Artikeln bzw. einer Artikelgruppe erforderlich sind. Die Artikel können in einem Massenstrom auf einer die erste Förderstrecke bildenden ersten Horizontalfördereinrichtung in Transportrichtung heranbefördert und in einen Eingriffs- und/oder Übernahmebereich der Handhabungseinrichtung befördert werden. Die zunächst im Massenstrom beförderten Artikel können hierbei auf ihrem Förderweg bspw. mittels vertikal stehender Gassenbleche oder auf andere Weise in seitlich voneinander separierten Reihen von regelmäßig hintereinander beförderten Artikeln aufgeteilt und zusammengeführt werden.

So können bspw. durch die Gassenbelche drei, vier, fünf oder mehr parallele Einzelgassen gebildet sein, innerhalb welcher die Artikel jeweils ohne Abstand hintereinander befördert werden. Aus diesen insgesamt drei, vier, fünf oder mehr parallelen Reihen können mittels der entsprechend dimensionierten und auf die Reihenanzahl abgestimmten Greiferköpfe der Handhabungseinrichtung jeweils eine Artikelgruppe für das Bestücken der Umverpackungen mit Artikeln bzw. der Artikelgruppe entnommen werden.

Wenn an dieser Stelle davon gesprochen wird, dass Umverpackungen mit Artikeln bestückt werden, so soll damit auch umfasst sein, dass die Umverpackungen mit einer Artikelgruppe bestückt werden, wobei jede dieser Artikelgruppen sich aus den einzelnen Artikeln zusammensetzt.

Auf einer insbesondere parallel zur ersten Horizontalfördereinrichtung der ersten Förderstrecke verlaufenden zweiten Horizontalfördereinrichtung, welche die zweite Förderstrecke bildet, werden in gleicher Transportrichtung die mit Artikeln zu bestückenden Umverpackungen heranbefördert und wie die Artikel in den Eingriffs- und/oder Übernahmebereich der Handhabungseinrichtung befördert, wo jede Umverpackung je nach ihrer Aufnahmekapazität mit einer definierten Anzahl von Artikeln bestückt wird. wahlweise können die Umverpackungen bspw. mit insgesamt zwanzig Artikeln bestückt werden, was jedoch nur beispielhaft zu verstehen ist, da die Umverpackungen auch andere Aufnahmekapazitäten aufweisen können. Die Umverpackungen werden auf der zweiten Horizontalfördereinrichtung in Transportrichtung in nur einer Reihe hintereinander befördert.

Je nach Ausführungsvariante kann die im Eingriffs- und/oder Übernahmebereich der Handhabungs- und/oder Verpackungsvorrichtung agierende Handhabungseinrichtung insgesamt zwei, drei, vier oder mehr parallel ansteuerbare Greiferköpfe umfassen, die zur gleichzeitigen Aufnahme und Erfassung von insgesamt zwei, drei, vier oder mehr Artikelgruppen mit jeweils z.B. zwanzig Artikeln in der Lage sind, um diese auf der ersten Horizontalfördereinrichtung zu erfassen, aus den Reihen nach oben herauszuheben und aufzunehmen, sie von der ersten Förderstrecke zur zweiten Förderstrecke zu überführen und dort jeweils von oben in die bereitstehenden bzw. mit geringerer Geschwindigkeit auf der zweiten Horizontalfördereinrichtung beförderten Umverpackungen einzusetzen.

Je nach Ausführungsvariante können die Greiferköpfe der Handhabungseinrichtung z.B. an einem Portalroboter in drei Achsen beweglich aufgehängt sein, wodurch die Greiferköpfe zwischen den beiden Förderstrecken zur Überführung von gleichzeitig mehreren Artikeln zu den in paralleler Transportrichtung bewegten Umverpackungen hin- und herbewegt und dabei gleichzeitig nach Bedarf angehoben und abgesenkt werden können. Um die Artikeln jeweils aufnehmen und bedarfsweise wieder freigeben und absetzen zu können, sind die Greiferköpfe vorzugsweise mit steuerbaren Sauggreifern oder mit steuerbaren Greiftulpen o. dgl. ausgestattet, mit denen die Artikel in deren Hals- oder Kopfbereich erfasst und für die Überführung und das annähernd senkrechte Einfügen in die oben offenen Umverpackungen sicher gehalten sowie zum Absetzen in der jeweils hierfür vorgesehenen Umverpackung zuverlässig freigegeben werden können.

Während der Aufnahme und Überführung von Artikeln mittels der Greiferköpfe kann die ununterbrochen fördernde erste Horizontalfördereinrichtung währenddessen weiterlaufen, während ein Anlagebalken für ein Aufstauen der nachgeförderten Artikeln in den z.B. fünf nebeneinander befindlichen Reihen sorgt. Der Anlagebalken sorgt zudem durch langsames Bewegen in Transportrichtung für eine Positionierung der Artikel, die nachfolgend durch die Handhabungseinrichtung mit ihren drei Greiferköpfen übernommen werden sollen und in die nächsten heranbeförderten Umverpackungen überführt werden sollen.

Der zweiten Förderstrecke, auf deren zweiten Horizontalfördereinrichtung die Umverpackungen befördert werden, sind geeignete Rückhalteelemente zugeordnet, wobei jeweils pro Längsseite der zweiten Förderstrecke z.B. drei Rückhalteelemente vorgesehen sein können. Mittels dieser Rückhaltelemente werden jeweils zumindest zwei benachbarte oder in Transportrichtung aufeinanderfolgende Umverpackungen auf der zweiten Förderstrecke zumindest phasenweise vor oder während des Bestückens der Umverpackungen mit den Artikeln miteinander gekoppelt und auf der zweiten Förderstrecke zurückgehalten und/oder gegenüber der Transportgeschwindigkeit der zweiten Förderstrecke verzögert. Die jeweils drei pro Längsseite der zweiten Förderstrecke vorgesehenen Rückhalteelemente sind insbesondere steuerbar und/oder aktivierbar oder deaktivierbar ausgebildet und können bspw. als verschwenkbar ausgebildete Klappen ausgebildet sein. Die Klappen umgreifen bei verschwenkter Position jeweils von oben die zu bestückenden zumindest zwei Umverpackungen an ihren sich berührenden oder zugewandten Flächen bzw. Stirnseiten, so diese zumindest zwei Umverpackungen miteinander gekoppelt werden. Zugleich werden durch das Koppeln die Umverpackungen für das nachfolgende Bestücken mit Artikeln zentriert und ausgerichtet.

Weiterhin kann vorgesehen sein, dass die Handhabungseinrichtung mit den durch die Greiferköpfe von der ersten Förderstrecke aufgenommenen Artikeln zumindest während des Einsetzens der Artikel in die bereitgestellten Umverpackungen annähernd mit derselben Transportgeschwindigkeit wie die auf der zweiten Förderstrecke bewegten Umverpackungen parallel zur und/oder entlang der Förderstrecke bewegbar ist bzw. bewegt wird, so dass durch die sich ständig auch während ihrer Bestückung mit Artikeln bewegenden Umverpackungen deutlich höhere Bestückungsleistungen beim Einsetzen der Artikel in die Umverpackungen erzielt werden können, als dies bisher bei stillstehenden Umverpackungen der Fall war.

Weiterhin kann zu beiden Längsseiten der zweiten Förderstrecke und parallel zu dieser verlaufend jeweils eine Führungsschiene o. dgl. Führungselement vorgesehen sein, entlang welcher die Rückhalteelemente, insbesondere die verschwenkbaren Klappen in paralleler Ausrichtung entlang beider Längsseiten der zweiten Förderstrecke verschiebbar oder insbesondere motorisch verfahrbar geführt sein können. Diese Führungselemente oder Führungsschienen sind vorzugsweise linear ausgebildet. Insbesondere sind die jeweils drei (oder mehr) pro Längsseite der zweiten Förderstrecke vorgesehenen verschwenkbaren Klappen gegenüberliegend angeordnet, wobei das Verfahren oder Verschieben und/oder Koppeln synchronisiert bzw. aufeinander abgestimmt ist.

Wenn die jeweils zu bestückenden Umverpackungen den Eingriffs- und/oder Übernahmebereich noch nicht vollständig erreicht haben, werden zeitlich vor dem Bestücken der Umverpackungen mit den Artikeln die Umverpackungen zunächst mittels der verschwenkbaren Klappen gekoppelt. Insbesondere werden die vorderste zu bestückende Umverpackung und die in Transportrichtung hinter der vordersten Umverpackung beförderte zweite zu bestückende Umverpackung durch eine erste verschwenkbare Klappe gekoppelt, wobei mittels einer zweiten verschwenkbaren Klappe die zweite Umverpackung und die in Transportrichtung hinter der zweiten Umverpackung zu bestückende dritte Umverpackung gekoppelt und mittels einer dritten verschwenkbaren Klappe die jeweils dritte Umverpackung und die in Transportrichtung hinter der dritten Umverpackung beförderte vierte Umverpackung gekoppelt werden, welche vierte Umverpackung jedoch zunächst nicht mit Artikeln bestückt wird, sondern erst im nächsten Verfahrensschritt mit Artikeln bestückt werden soll.

Durch das Koppeln der Umverpackungen werden diese zunächst auf der zweiten Förderstrecke zurückgehalten und/oder gegenüber der Transportgeschwindigkeit der zweiten Förderstrecke verzögert, während hingegen bereits befüllte Umverpackungen auf einer weiteren Horizontalfördereinrichtung zum nachfolgenden Palettieren oder Stapeln weitertransportiert werden.

Rein vorsorglich wird darauf hingewiesen, dass die oben gewählten Bezeichnungen bzw. Nummerierungen der Umverpackungen nur beispielhaft und nicht einschränkend zu verstehen sind, da die Umverpackungen ununterbrochen auf der zweiten Förderstrecke befördert werden und eine derart vereinfachte Nummerierung nur bedingt möglich ist. Grundsätzlich ist jedoch davon auszugehen, dass in Abhängigkeit von der Anzahl an zu bestückenden Umverpackungen entsprechend auch die Anzahl an Rückhalteelementen zu bestimmen ist, d.h. wenn bspw. drei Rückhaltelemente vorgesehen sind, dann können auch drei Umverpackungen gleichzeitig auf die beschriebene Weise mit Artikeln bestückt werden.

Wenn die jeweils mittels der verschwenkten Klappen gekoppelten Umverpackungen vollständig den Eingriffs- und/oder Übernahmebereich erreicht haben, wurden gleichzeitig die verschwenkbaren Klappen jeweils entlang der Führungsschienen in Transportrichtung verschoben und insbesondere motorisch verfahren. Die verschwenkten Klappen sind insbesondere gegenüber der zweiten Förderstrecke mit reduzierter Transportgeschwindigkeit mitbewegbar, wodurch die jeweils gekoppelten Umverpackungen gegenüber der regulären Transportgeschwindigkeit der zweiten Förderstrecke dem Eingriffs- und/oder Übernahmebereich verzögert zugeführt werden können.

Während der Bestückung von Umverpackungen mittels der Greiferköpfe mit einer jeweils vorgesehenen Anzahl an Artikeln bleiben die Umverpackungen weiter durch die verschwenkten Klappen miteinander gekoppelt.

Durch das Entnehmen und Überführen der Artikel von der ersten Förderstrecke und durch das Einsetzen der Artikel in die auf der zweiten Förderstrecke beförderten Umverpackungen wurde zwischen den auf der ersten Förderstrecke in Reihen transportierten Artikel und dem Anlagebalken ein Abstand erzeugt, welcher der Anzahl an entnommenen Artikeln entspricht.

In dieser Prozessphase geben die verschwenkten Klappen die zuvor gekoppelten Umverpackungen wieder frei, nachdem die drei Umverpackungen nun jeweils mit der vorgesehenen Anzahl an Artikeln bestückt worden sind. Die befüllten Umverpackungen können nun in Transportrichtung und entsprechend der Transportgeschwindigkeit der zweiten Förderstrecke weiter transportiert werden. Dadurch verlassen die bereits bestückten Umverpackungen den Eingriffs- und/oder Übernahmebereich.

Zugleich bleibt der Anlagebalken in der gleichen Position innerhalb des Eingriffs- und/oder Übernahmebereichs, so dass der durch das Entnehmen und Überführen der Artikel von der ersten Förderstrecke und durch das Einsetzen der Artikel in die auf der zweiten Förderstrecke beförderten Umverpackungen erzeugte Abstand vorläufig weiterhin bestehen bleibt.

In einer weiteren Prozessphase sind die verschwenkbaren Klappen jeweils zu beiden Längsseiten der zweiten Förderstrecke entgegen der Transportrichtung und insbesondere entlang der Führungsschienen in ihre Ausgangsposition verfahren.

Die verschwenkbaren Klappen befinden sich solange in einer unverschwenkten Position, bis die zu bestückenden Umverpackungen, insbesondere die vierte Umverpackung, welche nun die vorderste bzw. erste Umverpackung ist, jeweils eine bestimmte Position erreicht hat/haben. Die Positionen der Umverpackungen können mittels wenigstens einer Positionserfassungseinrichtung zur Erkennung einer Position einer zu bestückenden Umverpackung und/oder zur Erfassung der Fördergeschwindigkeit dieser Umverpackung zugeordnet sein, wobei insbesondere in Abhängigkeit von den erfassten Signalen ein Ansteuerungssignal zum Koppeln der Umverpackungen erzeugbar und/oder generierbar ist. Außerdem werden insbesondere die von der Positionserfassungseinrichtung generierten Ausgangssignale verarbeitet und hinsichtlich einer Ansteuerung der Handhabungseinrichtung zumindest beim Einsetzen einer Artikelgruppe in die auf der zweiten Förderstrecke beförderten Umverpackungen und/oder hinsichtlich einer Ansteuerung der zweiten Förderstrecke zum Positionieren mindestens einer weiteren mit Artikeln zu bestückenden Umverpackung ausgewertet.

Währenddessen wurde der Anlagebalken entgegen der Transportrichtung entlang der ersten Förderstrecke verfahren, so dass der Anlagebalken für ein Aufstauen der nun vordersten Artikel in den fünf nebeneinander befindlichen Reihen auf der ersten Förderstrecke sorgt. Dadurch kann der zuvor erzeugte Abstand durch das Entnehmen der Artikel für das Bestücken der drei Umverpackungen reduziert werden.

In einem weiteren Prozessschritt kann der Anlagebalken in Transportrichtung derartig verfahren werden, so dass die daran aufgestauten Artikel in den Eingriffs- und Übernahmebereich gelangen und innerhalb des Eingriffs- und Übernahmebereichs von den Greiferköpfen von der ersten Förderstrecke aufgenommen sowie zur zweiten Förderstrecke überführt und dort in die bereitgestellten Umverpackungen eingesetzt werden können.

Wahlweise können auch beiden Längsseiten der zweiten Förderstrecke und parallel zu dieser verlaufend jeweils eine Führungsschiene zugeordnet sein, welche Führungsschienen bspw. auch umlaufend ausgebildet sein können. Zudem können jeweils pro Längsseite bspw. drei Gruppen mit je drei Rückhalteelementen vorgesehen sein, welche entlang der beiden Führungsschienen umlaufend verschiebbar oder insbesondere motorisch verfahrbar ausgebildet sind. Wie bereits zuvor beschrieben, dienen die Rückhalteelemente jeweils dazu, zumindest zwei benachbarte oder in Transportrichtung aufeinanderfolgende Umverpackungen auf der zweiten Förderstrecke zumindest phasenweise vor oder während des Bestückens der Umverpackungen mit den Artikeln miteinander zu koppeln und auf der zweiten Förderstrecke zurückzuhalten und/oder gegenüber der Transportgeschwindigkeit der zweiten Förderstrecke zu verzögern.

Während bei einer Gruppe die ihr zugeordneten drei Klappen verschwenkt sein und die zu bestückenden Umverpackungen miteinander koppeln können, werden die Gruppen mit jeweils nicht verschwenkten Klappen entlang der umlaufenden Führungsschienen entgegen der Transportrichtung zurückgeführt. Die Rückführung und/oder der Rücktransport der jeweils nicht verschwenkten Klappen kann mit einer höheren Transportgeschwindigkeit oder der gleichen Transportgeschwindigkeit wie die Transportgeschwindigkeit der zweiten Förderstrecke erfolgen. Insbesondere können die drei Gruppen mit je drei verschwenkbaren Klappen jeweils derart gesteuert werden, dass unmittelbar nach dem Bestücken der drei Umverpackungen mit Artikeln und bereits phasenweise vor oder nach dem Entkoppeln der einen Gruppe von Klappen bereits eine weitere Gruppe mit Klappen zum nachfolgenden Koppeln der zu bestückenden Umverpackungen nachrückt.

Die verschwenkbaren Klappen stellen vorzugsweise jeweils eine Aufnahme bereit, welche vorzugsweise U-förmig ausgebildet sein können. Eine solche U-förmige Aufnahme der verschwenkten Klappe kann jeweils die sich berührenden oder zugewandten Flächen bzw. Stirnseiten der zwei Umverpackungen von oben aufnehmen bzw. umgreifen, so dass dadurch die mindestens zwei Umverpackungen zumindest phasenweise vor oder während des Bestückens der Umverpackungen mit Artikeln gekoppelt werden. Das Koppeln der zwei Umverpackungen dient zugleich auch der Zentrierung und Ausrichtung der zu bestückenden Umverpackungen.

Wahlweise können die die Rückhalteelemente bildenden verschwenkbaren Klappen auch jeweils einen länglichen Steg umfassen, von welchem sich beidseitig und beabstandet zueinander drei Laschen symmetrisch erstrecken. Insbesondere erstrecken sich die Laschen jeweils winkelig vom länglichen Steg, so dass eine V-förmige Aufnahme ausgebildet wird. Das Verschwenken der Klappe erfolgt vorzugsweise mittels eines geeigneten Aktors wie bspw. eines hydraulischen, elektrischen oder pneumatischen Zylinders.

Wahlweise können die Rückhalteelemente auch jeweils durch zwei Klappenpaare gebildet sein, die bei verschwenkter Position die zu bestückenden Umverpackungen umgreifen und diese zumindest zwei Umverpackungen miteinander sowie mit dem an der Führungsschiene geführten Rückhalteelement koppelt, so dass die zumindest zwei gekoppelten Umverpackungen gegenüber der Transportgeschwindigkeit der zweiten Förderstrecke abgebremst und/oder zurückgehalten werden können bzw. abbremsbar und/oder zurückhaltbar sind. Jedes Klappenpaar setzt sich typischerweise aus zwei einzelnen Klappen zusammen, die unabhängig voneinander, vorzugsweise jedoch synchron zueinander verschwenkbar und/oder entlang der Führungsschiene verschiebbar oder verfahrbar geführt sind.

Bei Erreichen der vordersten zu bestückenden Umverpackungen haken sich die einzelnen Klappen des Klappenpaares jeweils von oben in eine Kante der zu bestückenden Umverpackungen ein. Durch eine gegensinnige Zustellbewegung des Klappenpaares in und gegen Transportrichtung werden die hintereinander beförderten und zu bestückenden Umverpackungen für das Bestücken mit Artikeln zentriert und ausgerichtet.

Außerdem kann alternativ auch vorgesehen sein, dass sich die Klappenpaare jeweils aus zwei einzelnen Klappen zusammensetzen, wobei die zwei einzelnen Klappen jeweils unabhängig voneinander, vorzugsweise jedoch synchron zueinander verschwenkbar und/oder entlang der Führungsschiene verschiebbar geführt sein können. Die einzelnen Klappen des Klappenpaares können bspw. jeweils L-förmig ausgebildet sein; außerdem können die einzelnen Klappen vorzugsweise derart ausgebildet sein, dass sich diese von oben in die zu koppelnden Umverpackungen eingreifen und insbesondere einhaken.

Das mehrfach erwähnte Rückhalteelement kann bspw. auch durch ein Paar von Rückhaltestäben gebildet sein, die in ausgefahrener Stellung senkrecht in Öffnungen der zwei zu bestückenden Umverpackungen eingreifen und dadurch diese zumindest zwei benachbarte oder in Transportrichtung aufeinanderfolgende Umverpackungen zumindest zeitlich vor oder während des Bestückens der Umverpackungen mit Artikeln miteinander koppelt, so dass die zumindest zwei gekoppelten Umverpackungen gegenüber der Transportgeschwindigkeit der zweiten Förderstrecke abgebremst und/oder zurückgehalten werden. Die einzelnen Rückhaltestäbe des Rückhaltestäbenpaares greifen jeweils derart in Öffnungen der zwei zu bestückenden Umverpackungen ein, dass diese jeweils unmittelbar in Transportrichtung vor oder hinter der sich berührenden oder zugewandten Flächen und/oder Stirnseiten der zwei zu bestückenden und zu koppelnden Umverpackungen angeordnet sind.

Nachdem die mittels der Rückhaltestäbe gekoppelten Umverpackungen mit Artikeln vollständig bestückt sind, ziehen sich bzw. fahren die Rückhaltestäbe zurück, so dass die Koppelung der Umverpackungen aufgehoben wird und die Umverpackungen mit der Transportgeschwindigkeit der zweiten Förderstrecke abtransportiert und/oder weitertransportiert werden. Das Verfahren der Rückhaltestäbe kann jeweils mittels hier nicht dargestellter pneumatischer, hydraulischer oder elektrischer Zylinder erfolgen.

Alternativ hierzu kann wahlweise auch nur ein Paar mit Rückhaltestäben vorgesehen sein, welches zwei Umverpackungen koppelt. In der Praxis können jeweils mehrere Rückhalteelemente in Form von einem Paar mit Rückhaltestäben entlang der zweiten Förderstrecke vorgesehen sein, welche jeweils die zu bestückenden Umverpackungen koppeln, wobei die Anzahl an Rückhalteelementen von der Anzahl an zu koppelnden Umverpackungen abhängt.

Nachfolgend soll nochmals eine alternative Handhabungs- und/oder Verpackungsvorrichtung in ihren Grundzügen und anhand ihrer Funktionsweise erläutert werden. Hierbei werden Artikel in einem Massenstrom auf einer die erste Förderstrecke bildenden ersten Horizontalfördereinrichtung in Transportrichtung heranbefördert und in einen Eingriffs- und/oder Übernahmebereich der Handhabungseinrichtung befördert. Die zunächst im Massenstrom beförderten Artikel können hierbei auf ihrem Förderweg bspw. mittels vertikal stehender Gassenbleche oder auf andere Weise in Reihen von regelmäßig hintereinander beförderten Artikeln aufgeteilt und zusammengeführt werden. In einer sinnvollen Variante werden durch die Gassenbelche z.B. fünf parallele Einzelgassen ausgebildet, innerhalb welcher die Artikel jeweils ohne Abstand hintereinander befördert werden. Aus diesen insgesamt fünf parallelen Reihen können mittels der entsprechend dimensionierten und auf die Reihenanzahl abgestimmten Greiferköpfe der Handhabungseinrichtung jeweils z.B. fünf Behälter für jeden Kasten entnommen werden, so dass jede Artikelgruppe insgesamt zwanzig Artikel umfasst.

Auf einer parallel zur ersten Horizontalfördereinrichtung der ersten Förderstrecke verlaufenden zweiten Horizontalfördereinrichtung, welche die zweite Förderstrecke bildet, werden in gleicher Transportrichtung die mit Artikeln zu bestückenden Umverpackungen heranbefördert und wie die Artikel in den Eingriffs- und/oder Übernahmebereich der Handhabungseinrichtung befördert, wo jede Umverpackung je nach ihrer Aufnahmekapazität mit einer definierten Anzahl von Artikeln bestückt werden. Die Umverpackungen werden auf der zweiten Horizontalfördereinrichtung in Transportrichtung in nur einer Reihe hintereinander befördert.

Um die mit Artikeln zu bestückenden Umverpackungen zurückzuhalten und/oder gegenüber der Transportgeschwindigkeit der zweiten Förderstrecke zu verzögern, ist unterhalb der zweiten Förderstrecke eine Rückhaltevorrichtung vorgesehen. Die Rückhaltevorrichtung umfasst zwei Rückhalteelemente jeweils in Gestalt eines Rückhaltefingers, welche an einer Fördereinrichtung bspw. in Gestalt eines Förderbandes umlaufend bewegt werden. Um die zu bestückenden Umverpackungen zurückzuhalten und/oder gegenüber der Transportgeschwindigkeit der zweiten Förderstrecke zu verzögern, überragt zumindest einer der Rückhaltefinger die zweite Förderstrecke zumindest abschnittsweise, so dass die darauf beförderten und mit Artikeln zu bestückenden Umverpackungen an dem Rückhaltefinger aufgestaut werden. Während des Bestückens der Umverpackungen wird der Rückhaltefinger in Transportrichtung entlang der umlaufenden Fördereinrichtung, jedoch langsamer als die Transportgeschwindigkeit der zweiten Förderstrecke bewegt, so dass die mit Artikeln zu bestückenden Umverpackungen zurückgehalten und/oder gegenüber der Transportgeschwindigkeit der zweiten Förderstrecke verzögert werden.

Nach Bestücken der Umverpackungen mit Artikeln wird der eine Rückhaltefinger unterhalb der zweiten Förderstrecke bewegt, so dass die bestückten Umverpackungen mit Transportgeschwindigkeit der zweiten Förderstrecke weiterbewegt werden.

Währenddessen wird der weitere Rückhaltefinger unterhalb der zweiten Förderstrecke und entgegen der Transportrichtung der zweiten Förderstrecke bewegt, so dass dieser zeitlich nach dem Bestücken der Umverpackungen mit Artikeln bereits die nachfolgenden zu bestückenden Umverpackungen zurückhalten und/oder gegenüber der Transportgeschwindigkeit der zweiten Förderstrecke verzögern kann.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt anhand einer schematischen Draufsicht den grundsätzlichen Aufbau einer erfindungsgemäßen Handhabungs- und/oder Verpackungsvorrichtung.
Fig. 2 zeigt insgesamt fünf schematischen Draufsichten (Fig. 2A, Fig. 2B, Fig. 2C, Fig. 2D, Fig. 2E) in aufeinander folgenden Prozessphasen die Bestückung von Umverpackungen mit Artikelgruppe, wobei die Umverpackungen kontinuierlich in einer Transportrichtung bewegt werden.
Fig. 3 zeigt anhand einer schematischen Draufsicht eine weitere Ausführungsform der erfindungsgemäßen Handhabungs- und/oder Verpackungsvorrichtung.
Fig. 4 zeigt anhand einer schematischen Seitenansicht zwei gekoppelte Umverpackungen.
Fig. 5 zeigt anhand zwei schematischen Perspektivansichten (Fig. 5A, Fig. 5B) eine Ausführungsform des Rückhalteelements.
Fig. 6 zeigt anhand zwei schematischen Draufsichten (Fig. 6A, Fig. 6B) einen Ausschnitt einer weiteren Ausführungsform der erfindungsgemäßen Handhabungs- und/oder Verpackungsvorrichtung.
Fig. 7 zeigt anhand einer schematischen Perspektivansicht das in Fig. 6 gezeigte Rückhalteelement.
Fig. 8 zeigt anhand einer schematischen Draufsicht einen Ausschnitt einer weiteren Ausführungsform der erfindungsgemäßen Handhabungs- und/oder Verpackungsvorrichtung.
Fig. 9 zeigt anhand zwei schematischen Ansichten (Fig. 9A, Fig. 9B) eine weitere Ausführungsform einer alternativen Handhabungs- und/oder Verpackungsvorrichtung.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung sowie das erfindungsgemäße Verfahren ausgestaltet sein können und stellen keine abschließende Begrenzung dar.

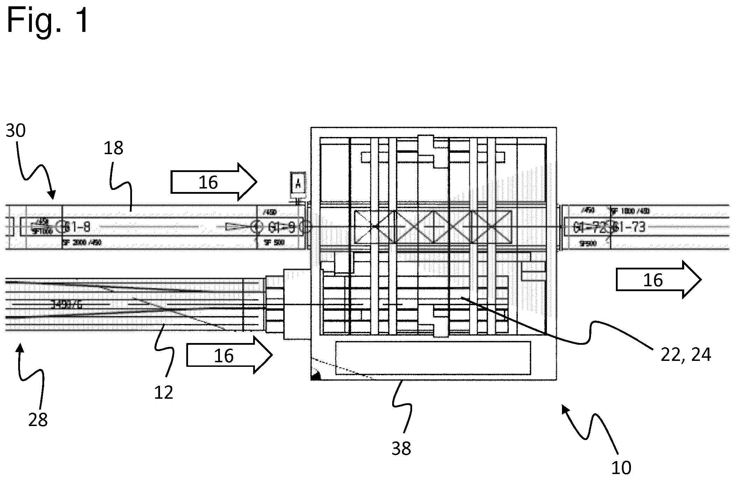

Die schematische Draufsicht der Fig. 1 soll lediglich den grundsätzlichen Aufbau einer erfindungsgemäßen Handhabung- und/oder Verpackungsvorrichtung 10 verdeutlichen, die der Umverpackung von Artikelgruppen dient, was im nachfolgend beschriebenen Ausführungsbeispiel durch das Überführen von Artikeln 14 in Umverpackung 20 zur oberseitigen Aufnahme einer definierten Anzahl von regelmäßig angeordneten bzw. passend gruppierten Artikeln veranschaulicht werden soll. Die hier nur schematisch angedeutete Handhabung- und/oder Verpackungsvorrichtung 10 umfasst eine erste Förderstrecke 12 zum Transportieren einer Vielzahl von aufrecht stehenden Artikeln 14, die hier bspw. durch aufrecht stehende Getränkebehälter gebildet sein können, was hier sowie in den nachfolgenden Figuren jedoch nicht im Detail dargestellt ist. Die Artikel 14 werden im Massenstrom und/oder im Reihentransport oder auch nach Gruppierung in gruppierten Anordnungen in einer definierten Transportrichtung 16, die zur Vorrichtung 10 hinführt, transportiert. Zudem umfasst die Vorrichtung 10 eine nahe der ersten Förderstrecke 12 befindliche und im gezeigten Ausführungsbeispiel parallel zu dieser verlaufende zweite Förderstrecke 18 zum aufeinanderfolgenden Transportieren von Umverpackungen 20, die bspw. durch Kartons oder Getränkekästen o. dgl. gebildet sein können, und die als Umverpackungen 20 für die Aufnahme jeweils mindestens einer, aus mehreren Artikeln 14 gebildeten Artikelgruppe vorgesehen und vorbereitet sind.

Wie dies bereits die schematische Draufsicht der Fig. 1 erkennen lässt, werden die Umverpackungen 20 auf der zweiten Förderstrecke 18 in derselben Transportrichtung 16 zur Vorrichtung 10 bewegt wie die Artikel 14 auf der ersten Förderstrecke 12. Diese Ausrichtung der beiden Förderstrecken 12 und 18 zueinander ist jedoch nicht unbedingt zwingend, sondern kann in der Praxis bedarfsweise auch variieren, so dass nichtparallele Transportrichtungen 16 der beiden Förderstrecken 12 und 18 für die Artikel 14 bzw. für die Umverpackungen 20 ebenso denkbar und handhabbar sind. Die Anordnung der ersten Förderstrecke 12 und der zweiten Förderstrecke 18 ist in der schematischen Darstellung der Fig. 1 in einer Weise gewählt, dass die Transportrichtung 16 nach rechts weist und dass sich die erste Förderstrecke 12 unterhalb der parallel dazu verlaufenden zweiten Förderstrecke 18 befindet, was in den nachfolgenden Figuren umgekehrt gewählt ist. Die exakte Anordnung der Förderstrecken 12 und 18 soll jedoch nicht näher interessieren, da grundsätzlich unterschiedliche Anordnungen möglich sind, die sich u.a. auch nach den zur Verfügung stehenden Platzverhältnissen zur Aufstellung der Maschine oder Vorrichtung 10 richten.

Weiterhin umfasst die gezeigte Handhabungs- und/oder Verpackungsvorrichtung 10 eine den beiden Förderstrecken 12 und 18 räumlich und funktionell gleichermaßen zugeordnete Handhabungseinrichtung 22 mit einem hier nicht näher verdeutlichten Greiferkopf 24 oder mehreren parallel ansteuerbaren Greiferköpfen 24, der bzw. die zur gleichzeitigen Aufnahme und Erfassung jeweils einer Artikelgruppe mit jedem vorhandenen Greiferkopf 24 von der ersten Förderstrecke 12 und zu deren Überführung zur zweiten Förderstrecke 18 innerhalb der Vorrichtung 10 und zum Einsetzen der Artikelgruppe, d.h. bspw. der Gruppe von Getränkebehältern, in eine der dort beförderten Umverpackungen 20 vorgesehen sind. Die in der Fig. 1 nur schematisch angedeuteten Handhabungseinrichtung 22 mit mindestens einem Greiferkopf 24 oder mit mehreren annähernd synchron beweglichen und steuerbaren Greiferköpfen 24 kann bspw. durch einen Portalroboter, einen Mehrachsroboter, einen Parallelkinematik-Roboter oder eine andere geeignete Handhabungseinrichtung 22 gebildet sein, deren Greiferkopf 24 oder deren Greiferköpfe 24 zwischen den beiden Förderstrecken 12 und 18 zur Überführung von gleichzeitig mehreren Artikeln 14 zu den in paralleler Transportrichtung 16 bewegten Umverpackungen 20 hin- und herbewegt und dabei gleichzeitig nach Bedarf angehoben und abgesenkt werden können.

Der an einem beweglichen Werkzeugkopf (nicht im Detail dargestellt) der Handhabungseinrichtung 22 befindliche steuerbare Greiferkopf 24 oder die mehreren Greiferköpfe 24 dienen der gleichzeitigen Aufnahme mehrerer Artikel 14 bzw. der Artikelgruppe wie bspw. Getränkebehältern oder Flaschen. Zu diesem Zweck ist der Greiferkopf 24 oder sind die Greiferköpfe 24 mit steuerbaren Sauggreifern oder mit steuerbaren Greiftulpen o. dgl. ausgestattet, mit denen die Artikel 14 in deren Hals- oder Kopfbereich erfasst und für die Überführung und das annähernd senkrechte Einfügen in die oben offenen Umverpackungen 20 (z.B. Getränkekästen) sicher gehalten sowie zum Absetzen in der hierfür jeweils vorgesehenen Umverpackung 20 zuverlässig freigegeben werden können. Sofern die Handhabungseinrichtung 22 in einer einfachsten Ausstattungsvariante mit nur einem Greiferkopf 24 ausgestattet ist, kann normalerweise gleichzeitig eine Umverpackung 20 mit einer definierten Anzahl von Artikeln 14 bzw. einer Artikelgruppe bestückt werden, bspw. mit einer Anzahl von im Rechteckverbund angeordneten Artikeln 14 von insgesamt zwanzig oder vierundzwanzig oder mehr Artikeln 14. Vorzugsweise kann die Handhabungseinrichtung 22 jedoch auch mit zwei oder drei gleichartigen Greiferköpfen 24 ausgestattet sein, die es erlauben, eine entsprechend größere Anzahl von Artikeln 14 gleichzeitig zu erfassen und bspw. in zwei oder drei hintereinander beförderte Umverpackungen 20 abzusetzen. Durch die solchermaßen geschaffene Möglichkeit der gleichzeitigen Bestückung mehrerer Umverpackungen 20 mit jeweiligen Gruppen von Artikeln 14 ist ein entsprechend hoher Durchsatz bei der Bestückung von Umverpackungen 20 mit Artikeln 14 möglich.

Zugleich kann der Handhabungseinrichtung 22 ein hier nicht dargestellter Einführrahmen zugeordnet sein, um das Einsetzen der Artikelgruppe bzw. der Artikel mittels der Greiferköpfen 24 zu erleichtern und/oder zu vereinfachen.

Die schematische Darstellung der Fig. 1 lässt weiterhin die aus der Vorrichtung 10 in Transportrichtung 16 rechts herausführende bzw. sich fortsetzende zweite Förderstrecke 18 erkennen, deren Transportrichtung 16 zur Abförderung der mit Artikeln 14 bestückten Umverpackungen 20 für deren weitere Handhabung wie etwa Palettierung unverändert ist. Normalerweise ist der nach rechts aus der Vorrichtung 10 herausführende Abschnitt der zweiten Förderstrecke 18 deren Fortsetzung, da die Umverpackungen 20 bei ihrer Bestückung mit Artikeln 14 nicht von der zweiten Förderstrecke 18 heruntergenommen oder entnommen werden.

Es sei an dieser Stelle darauf hingewiesen, dass das als unverzichtbarer Bestandteil der vorliegenden Erfindung anzusehende Rückhaltelement 26, welches parallel zur zweiten Förderstrecke 18 verschiebbar oder verfahrbar ist, um die mit einer Artikelgruppe zu bestückenden Umverpackungen 20 auf der zweiten Förderstrecke 18 zu koppeln, in der Fig. 1 nicht erkennbar ist, gleichwohl aber Teil der erfindungsgemäßen Handhabungs- und/oder Verpackungsvorrichtung 10 ist. Das Rückhalteelement 26, seine Anordnung und genauere Funktion werden anhand der nachfolgenden Figuren näher erläutert.

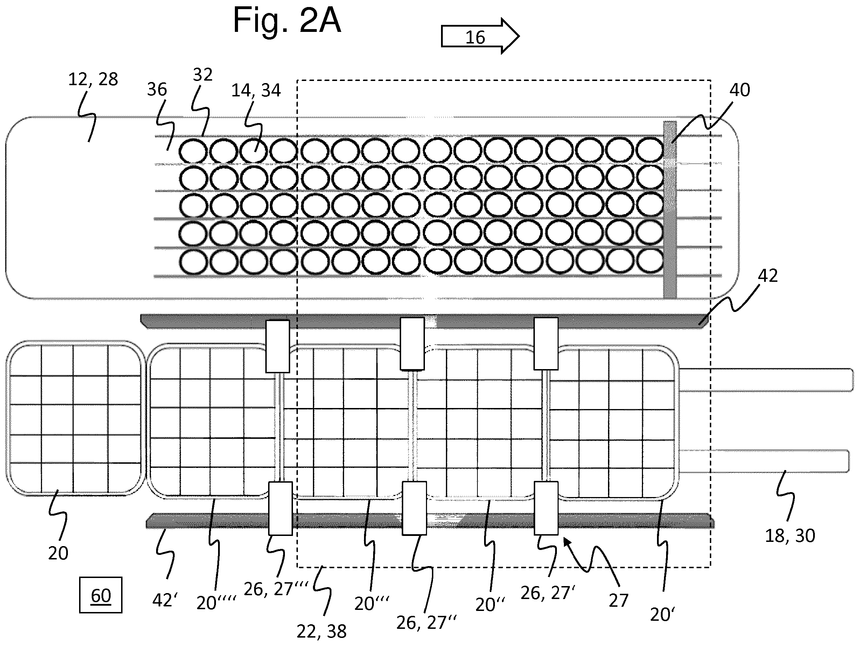

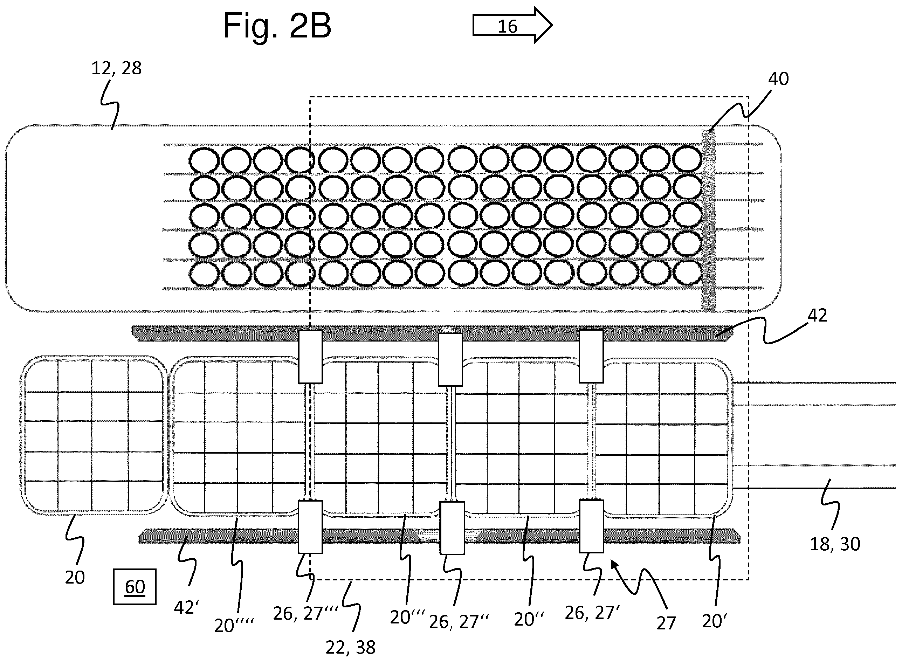

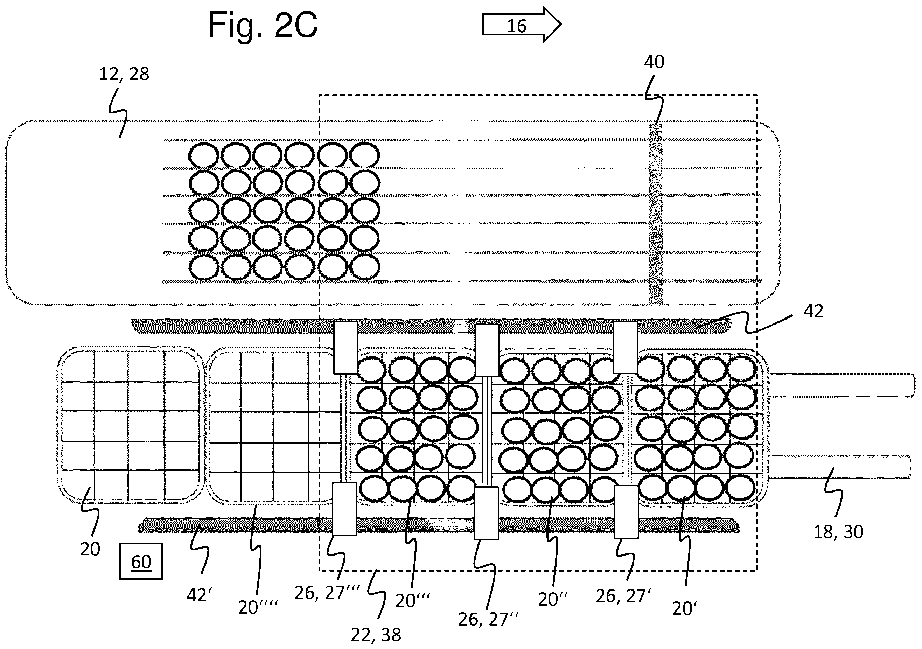

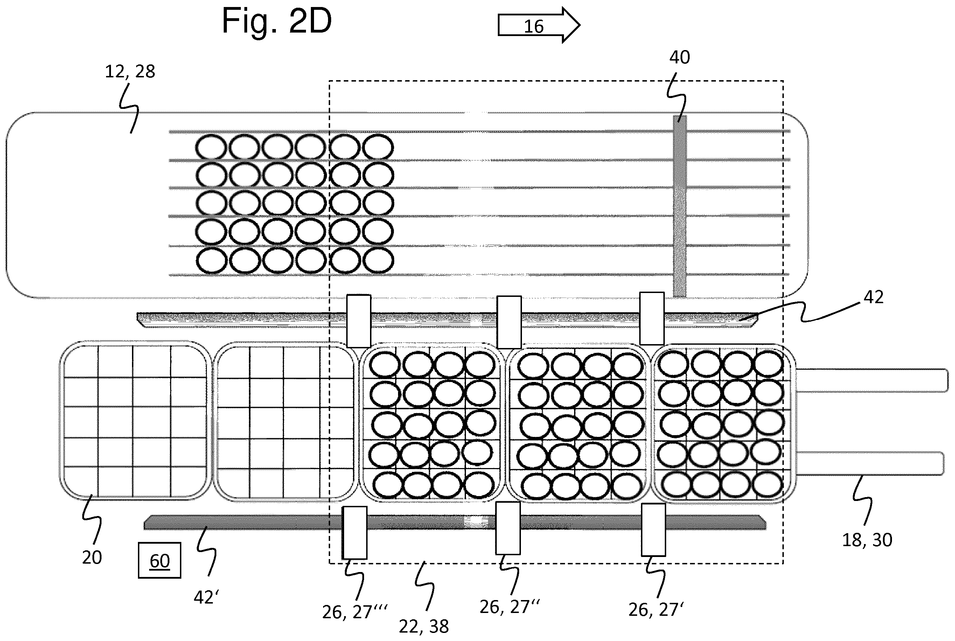

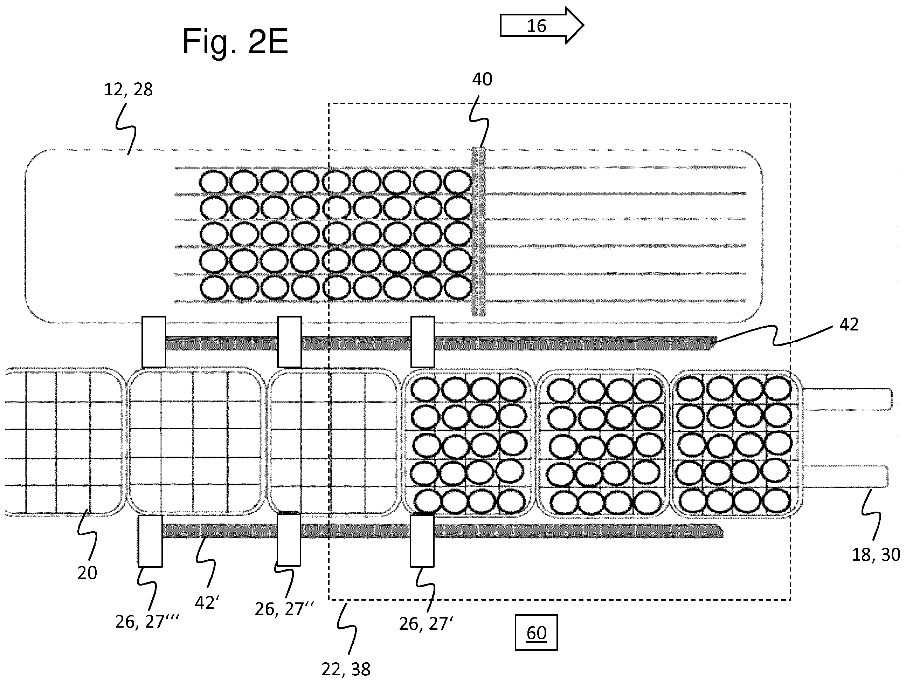

Die insgesamt fünf schematischen Draufsichten der Figuren 2A bis 2E verdeutlichen anhand einer ersten Ausführungsvariante der in Fig. 1 lediglich in ihren Prinzipien beschriebenen Vorrichtung 10 im Detail die aufeinanderfolgenden Prozessschritte bei der Bestückung von ununterbrochen in Reihe 34 beförderten Umverpackungen 20 mit jeweils einer Gruppe von insgesamt 20 Artikeln 14 bzw. einer Artikelgruppe. Die Artikel 14 können in einem Massenstrom auf einer die erste Förderstrecke 12 bildenden ersten Horizontalfördereinrichtung 28 in Transportrichtung 16 (hier von links nach rechts weisend; obere Förderstrecke) heranbefördert und in einen Eingriffs- und/oder Übernahmebereich 38 der Handhabungseinrichtung 22 befördert werden. Die zunächst im Massenstrom beförderten Artikel 14 können hierbei auf ihrem Förderweg bspw. mittels vertikal stehender Gassenbleche 32 oder auf andere Weise in Reihen 34 von regelmäßig hintereinander beförderten Artikeln 14 aufgeteilt und zusammengeführt werden. Im Ausführungsbeispiel der Fig. 2 werden durch die Gassenbelche 32 fünf parallele Einzelgassen 36 gebildet, innerhalb welcher die Artikel 14 jeweils ohne Abstand hintereinander befördert werden. Aus diesen insgesamt fünf parallelen Reihen 34 können mittels der entsprechend dimensionierten und auf die Reihenanzahl abgestimmten Greiferköpfe 24 der Handhabungseinrichtung 22 jeweils eine Artikelgruppe für das Bestücken der Umverpackungen 20 mit Artikeln 14 bzw. der Artikelgruppe entnommen werden.

Wenn gleich nachfolgend die Rede davon ist, dass Umverpackungen 20 mit Artikeln 14 bestückt werden, so soll damit auch umfasst sein, dass die Umverpackungen 20 mit einer Artikelgruppe bestückt werden, welche sich aus den einzelnen Artikeln 14 zusammensetzt.

Auf einer parallel zur ersten Horizontalfördereinrichtung 28 der ersten Förderstrecke 12 verlaufenden zweiten Horizontalfördereinrichtung 30, welche die zweite Förderstrecke 18 bildet, werden in gleicher Transportrichtung 16 die mit Artikeln 14 zu bestückenden Umverpackungen 20 heranbefördert und wie die Artikel 14 in den Eingriffs- und/oder Übernahmebereich 38 der Handhabungseinrichtung 22 befördert, wo jede Umverpackung 20 je nach ihrer Aufnahmekapazität mit einer definierten Anzahl von Artikeln 14 bestückt wird. Gemäß vorliegenden Figuren werden die Umverpackungen 20 mit insgesamt zwanzig Artikeln 14 bestückt. Die Umverpackungen 20 werden auf der zweiten Horizontalfördereinrichtung 30 in Transportrichtung 16 in nur einer Reihe hintereinander befördert.

Im Ausführungsbeispiel der Figuren 2A bis 2E umfasst die im Eingriffs- und/oder Übernahmebereich 38 der Handhabungs- und/oder Verpackungsvorrichtung 10 agierende Handhabungseinrichtung 22 insgesamt drei parallel ansteuerbare Greiferköpfe 24, die zur gleichzeitigen Aufnahme und Erfassung von insgesamt drei Artikelgruppen mit jeweils zwanzig Artikeln 14 in der Lage sind, um diese auf der ersten Horizontalfördereinrichtung 28 zu erfassen, aus den Reihen 34 nach oben herauszuheben und aufzunehmen, sie von der ersten Förderstrecke 12 zur zweiten Förderstrecke 18 zu überführen und dort jeweils von oben in die bereitstehenden bzw. mit geringerer Geschwindigkeit auf der zweiten Horizontalfördereinrichtung 30 beförderten Umverpackungen 20 einzusetzen. Wie es die Figuren 2A bis 2E nicht näher erkennen lassen, können die Greiferköpfe 24 der Handhabungseinrichtung 22 z.B. an einem Portalroboter in drei Achsen beweglich aufgehängt sein, wodurch die Greiferköpfe 24 zwischen den beiden Förderstrecken 12 und 18 zur Überführung von gleichzeitig mehreren Artikeln 14 zu den in paralleler Transportrichtung 16 bewegten Umverpackungen 20 hin- und herbewegt und dabei gleichzeitig nach Bedarf angehoben und abgesenkt werden. Um die Artikeln 14 jeweils aufnehmen und bedarfsweise wieder freigeben und absetzen zu können, sind die Greiferköpfe 24 vorzugsweise mit steuerbaren Sauggreifern oder mit steuerbaren Greiftulpen o. dgl. ausgestattet, mit denen die Artikel 14 in deren Hals- oder Kopfbereich erfasst und für die Überführung und das annähernd senkrechte Einfügen in die oben offenen Umverpackungen 20 sicher gehalten sowie zum Absetzen in der jeweils hierfür vorgesehenen Umverpackung 20 zuverlässig freigegeben werden können.

Während der Aufnahme und Überführung von Artikeln 14 mittels der Greiferköpfe 24 kann die ununterbrochen fördernde erste Horizontalfördereinrichtung 28 währenddessen weiterlaufen, während ein Anlagebalken 40 für ein Aufstauen der nachgeförderten Artikeln 14 in den fünf nebeneinander befindlichen Reihen 34 sorgt. Der Anlagebalken 40 sorgt zudem durch langsames Bewegen in Transportrichtung 16 für eine Positionierung der Artikel 14, die nachfolgend durch die Handhabungseinrichtung 22 mit ihren drei Greiferköpfen 24 übernommen werden sollen und in die nächsten heranbeförderten Umverpackungen 20 überführt werden sollen.

Der zweiten Förderstrecke 18, auf deren zweiten Horizontalfördereinrichtung 30 die Umverpackungen 20 befördert werden, sind Rückhalteelemente 26 zugeordnet, wobei jeweils pro Längsseite der zweiten Förderstrecke 18 drei Rückhalteelemente 26 vorgesehen sind. Mittels der Rückhaltelemente 26 werden jeweils zumindest zwei benachbarte oder in Transportrichtung 16 aufeinanderfolgende Umverpackungen 20 auf der zweiten Förderstrecke 18 zumindest phasenweise vor oder während des Bestückens der Umverpackungen 20 mit den Artikeln 14 miteinander gekoppelt und auf der zweiten Förderstrecke 18 zurückgehalten und/oder gegenüber der Transportgeschwindigkeit der zweiten Förderstrecke 18 verzögert. Die jeweils drei pro Längsseite der zweiten Förderstrecke 18 vorgesehenen Rückhalteelemente 26 sind insbesondere steuerbar und/oder aktivierbar oder deaktivierbar ausgebildet und in Gestalt von verschwenkbar ausgebildeten Klappen 27 gebildet. Die Klappen 27 umgreifen bei verschwenkter Position jeweils von oben die zu bestückenden zumindest zwei Umverpackungen 20 an ihren sich berührenden oder zugewandten Flächen bzw. Stirnseiten, so diese zumindest zwei Umverpackungen 20 miteinander gekoppelt werden. Zugleich werden durch das Koppeln die Umverpackungen 20 für das nachfolgende Bestücken mit Artikeln 14 zentriert und ausgerichtet.

Weiterhin ist vorgesehen, dass die Handhabungseinrichtung 22 mit den durch die Greiferköpfe 24 von der ersten Förderstrecke 12 aufgenommenen Artikeln 14 zumindest während des Einsetzens der Artikel 14 in die bereitgestellten Umverpackungen 20 annähernd mit derselben Transportgeschwindigkeit wie die auf der zweiten Förderstrecke 18 bewegten Umverpackungen 20 parallel zur und/oder entlang der Förderstrecke 18 bewegbar ist bzw. bewegt wird, so dass durch die sich ständig auch während ihrer Bestückung mit Artikeln 14 bewegenden Umverpackungen 20 deutlich höhere Bestückungsleistungen beim Einsetzen der Artikel 14 in die Umverpackungen 20 erzielt werden können, als dies bisher bei stillstehenden Umverpackungen der Fall war.

Gemäß den Figuren 2 ist zu beiden Längsseiten der zweiten Förderstrecke 18 und parallel zu dieser verlaufend jeweils eine Führungsschiene 42, 42' vorgesehen, entlang welcher die Rückhalteelemente 26, insbesondere die verschwenkbaren Klappen 27 in paralleler Ausrichtung entlang beider Längsseiten der zweiten Förderstrecke 18 verschiebbar oder insbesondere motorisch verfahrbar geführt sind. Die Führungsschienen 42, 42' sind linear ausgebildet. Insbesondere sind die jeweils drei pro Längsseite der zweiten Förderstrecke 18 vorgesehenen verschwenkbaren Klappen 27 gegenüberliegend angeordnet, wobei das Verfahren oder Verschieben und/oder Koppeln synchronisiert bzw. aufeinander abgestimmt ist.

Anhand der Fig. 2A wird gezeigt, dass die jeweils zu bestückenden Umverpackungen 20 den Eingriffs- und/oder Übernahmebereich 38 noch nicht vollständig erreicht haben. Zeitlich vor dem Bestücken der Umverpackungen 20 mit den Artikeln 14 werden diese zunächst mittels den verschwenkbaren Klappen 27 gekoppelt. Insbesondere werden die vorderste zu bestückende Umverpackung 20' und die in Transportrichtung 16 hinter der vordersten Umverpackung 20' beförderte zweite zu bestückende Umverpackung 20" durch eine erste verschwenkbaren Klappe 27' gekoppelt, wobei mittels einer zweiten verschwenkbaren Klappe 27" die zweite Umverpackung 20" und die in Transportrichtung 16 hinter der zweiten Umverpackung 20" zu bestückende dritte Umverpackung 20'" gekoppelt und mittels einer dritten verschwenkbaren Klappe 27'" die jeweils dritte Umverpackung 20'" und die in Transportrichtung 16 hinter der dritten Umverpackung 20'" beförderte vierte Umverpackung 20"" gekoppelt werden, welche vierte Umverpackung 20"" jedoch zunächst nicht mit Artikeln 14 bestückt, sondern erst im nächsten Verfahrensschritt mit Artikeln 14 bestückt wird.

Durch das Koppeln der Umverpackungen 20 werden diese zunächst auf der zweiten Förderstrecke 18 zurückgehalten und/oder gegenüber der Transportgeschwindigkeit der zweiten Förderstrecke 18 verzögert, während hingegen bereits befüllte Umverpackungen 20 nach rechts auf einer hier nicht dargestellten weiteren Horizontalfördereinrichtung zum nachfolgenden Palettieren oder Stapeln weitertransportiert werden.

Ergänzend sei an dieser Stelle zu erwähnen, dass die Bezeichnungen bzw. Nummerierungen der Umverpackungen 20 nur beispielhaft und nicht einschränkend zu verstehen sind, da die Umverpackungen 20 ununterbrochen auf der zweiten Förderstrecke 18 befördert werden und eine derart vereinfachte Nummerierung nur bedingt möglich ist. Grundsätzlich ist jedoch davon auszugehen, dass in Abhängigkeit von der Anzahl an zu bestückenden Umverpackungen 20 entsprechend auch die Anzahl an Rückhalteelementen 26 zu bestimmen ist, d.h. wenn bspw. drei Rückhaltelemente 26 vorgesehen sind, dann werden drei Umverpackungen 20 mit Artikeln 14 bestückt.

Anhand der Fig. 2B wird deutlich, dass die jeweils mittels der verschwenkten Klappen 27 gekoppelten Umverpackungen 20 vollständig den Eingriffs- und/oder Übernahmebereich 38 erreicht haben, in dem die verschwenkbaren Klappen 27 jeweils entlang der Führungsschienen 42, 42' in Transportrichtung verschoben und insbesondere motorisch verfahren sind. Die verschwenkten Klappen 27 sind insbesondere gegenüber der zweiten Förderstrecke 18 mit reduzierter Transportgeschwindigkeit mitbewegbar, wodurch die jeweils gekoppelten Umverpackungen 20 gegenüber der Transportgeschwindigkeit der zweiten Förderstrecke 18 dem Eingriffs- und/oder Übernahmebereich 37 verzögert zugeführt werden.

Anhand der Fig. 2C wird deutlich, dass die ersten drei Umverpackungen 20 nun mittels den Greiferköpfen 24 mit einer vorgesehenen Anzahl an Artikeln 14 bestückt wurden, wobei während des Bestückens die Umverpackungen 20 weiter durch die verschwenkten Klappen 27 miteinander gekoppelt bleiben.

Durch das Entnehmen und Überführen der Artikel 14 von der ersten Förderstrecke 12 und durch das Einsetzen der Artikel 14 in die auf der zweiten Förderstrecke 18 beförderten Umverpackungen 20 wurde zwischen den auf der ersten Förderstrecke 12 in Reihen transportierten Artikel 14 und dem Anlagebalken 40 ein Abstand erzeugt, welcher der Anzahl an entnommenen Artikeln 14 entspricht.

Anhand der Fig. 2D geben die verschwenkten Klappen 27 die zuvor gekoppelten Umverpackungen 20 wieder frei, nachdem die drei Umverpackungen 20 nun jeweils mit der vorgesehenen Anzahl an Artikeln 14 bestückt worden sind. Die befüllten Umverpackungen 20 können nun in Transportrichtung 16 und entsprechend der Transportgeschwindigkeit der zweiten Förderstrecke 18 weiter transportiert werden. Dabei verlassen die bereits bestückten Umverpackungen 20 den Eingriffs- und/oder Übernahmebereich 38.

Zugleich bleibt der Anlagebalken 40 in der gleichen Position innerhalb des Eingriffs- und/oder Übernahmebereichs 38, so dass der durch das Entnehmen und Überführen der Artikel 14 von der ersten Förderstrecke 12 und Einsetzen der Artikel 14 in die auf der zweiten Förderstrecke 18 beförderten Umverpackungen 20 erzeugte Abstand vorläufig weiterhin bestehen bleibt.

Anhand der Fig. 2E sind die verschwenkbaren Klappen 27 jeweils zu beiden Längsseiten der zweiten Förderstrecke 18 entgegen der Transportrichtung 16 und insbesondere entlang der Führungsschienen 42, 42' in ihre Ausgangsposition verfahren.

Die verschwenkbaren Klappen 27 befinden sich solange in einer unverschwenkten Position bis die zu bestückenden Umverpackungen 20, insbesondere die vierte Umverpackung 20"", welche nun die vorderste bzw. erste Umverpackung 20 ist, jeweils eine bestimmte Position erreicht hat/haben. Die Positionen der Umverpackungen 20 können mittels wenigstens einer Positionserfassungseinrichtung 60 zur Erkennung einer Position einer zu bestückenden Umverpackung 20 und/oder zur Erfassung der Fördergeschwindigkeit dieser Umverpackung 20 zugeordnet sein, wobei insbesondere in Abhängigkeit von den erfassten Signalen ein Ansteuerungssignal zum Koppeln der Umverpackungen 20 erzeugbar und/oder generierbar ist. Außerdem werden insbesondere die von der Positionserfassungseinrichtung 60 generierten Ausgangssignale verarbeitet und hinsichtlich einer Ansteuerung der Handhabungseinrichtung 22 zumindest beim Einsetzen einer Artikelgruppe in die auf der zweiten Förderstrecke 18 beförderten Umverpackungen 20 und/oder hinsichtlich einer Ansteuerung der zweiten Förderstrecke 18 zum Positionieren mindestens einer weiteren mit Artikeln 14 zu bestückenden Umverpackung 20 ausgewertet.

Währenddessen wurde der Anlagebalken 40 entgegen der Transportrichtung 16 entlang der ersten Förderstrecke 12 verfahren, so dass der Anlagebalken 40 für ein Aufstauen der nun vordersten Artikeln 14 in den fünf nebeneinander befindlichen Reihen 34 auf der ersten Förderstrecke 12 sorgt. Dadurch kann der zuvor erzeugte Abstand durch das Entnehmen der Artikel 14 für das Bestücken der drei Umverpackungen 20 reduziert werden.

In einem weiteren hier nicht dargestellten Prozessschritt kann der Anlagebalken 40 in Transportrichtung 16 derartig verfahren werden, so dass die daran aufgestauten Artikel 14 in den Eingriffs- und Übernahmebereich 38 gelangen und innerhalb des Eingriffs- und Übernahmebereichs 38 von den Greiferköpfen 24 von der ersten Förderstrecke 12 aufgenommen sowie zur zweiten Förderstrecke 18 überführt und dort in die bereitgestellten Umverpackungen 20 eingesetzt werden können.

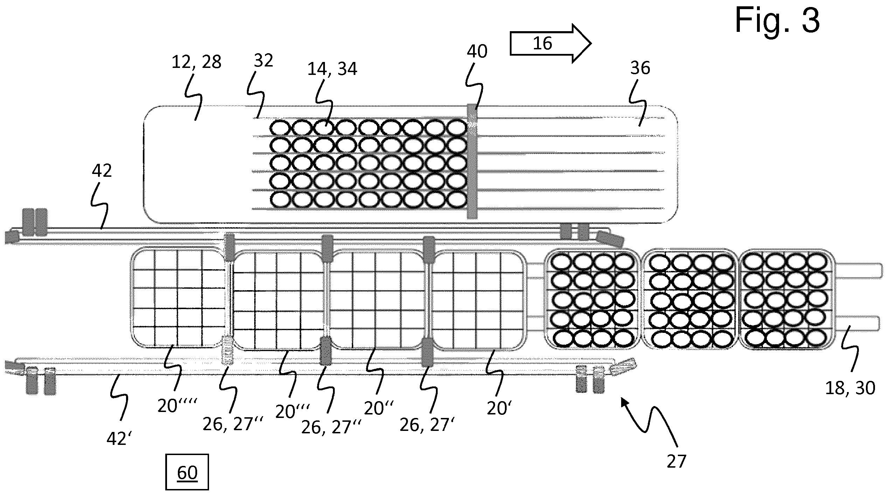

Die Fig. 3 zeigt in einer schematischen Draufsicht eine weitere Ausführungsform der erfindungsgemäßen Handhabungs- und/oder Verpackungsvorrichtung 10. Die in Fig. 3 gezeigte Ausführungsform unterscheidet sich von der in Fig. 1 gezeigten Ausführungsform im Wesentlichen dadurch, dass beiden Längsseiten der zweiten Förderstrecke 18 und parallel zu dieser verlaufend jeweils eine Führungsschiene 42, 42' zugeordnet ist, welche Führungsschienen 42, 42' umlaufend ausgebildet sind.

Anhand der Fig. 3 wird deutlich, dass jeweils pro Längsseite drei Gruppen mit je drei Rückhalteelementen 26 vorgesehen sind, welche entlang der Führungsschienen 42, 42' umlaufend verschiebbar oder insbesondere motorisch verfahrbar ausgebildet sind. Wie bereits zuvor beschrieben, dienen die Rückhalteelemente 26 jeweils dazu, zumindest zwei benachbarte oder in Transportrichtung 16 aufeinanderfolgende Umverpackungen 20 auf der zweiten Förderstrecke 18 zumindest phasenweise vor oder während des Bestückens der Umverpackungen 20 mit den Artikeln 14 miteinander zu koppeln und auf der zweiten Förderstrecke 18 zurückzuhalten und/oder gegenüber der Transportgeschwindigkeit der zweiten Förderstrecke 18 zu verzögern.

Während eine Gruppe mit je drei Klappen 27 verschwenkt sind und die zu bestückenden Umverpackungen 20', 20", 20'" miteinander koppelt, werden die Gruppen mit jeweils nicht verschwenkten Klappen 27 entlang der umlaufenden Führungsschienen 42, 42' entgegen der Transportrichtung 16 zurückgeführt. Die Rückführung und/oder der Rücktransport der jeweils nicht verschwenkten Klappen 17 kann mit einer höheren Transportgeschwindigkeit oder der gleichen Transportgeschwindigkeit wie die Transportgeschwindigkeit der zweiten Förderstrecke 18 erfolgen. Insbesondere werden die drei Gruppen mit je drei verschwenkbaren Klappe 17 jeweils derart gesteuert, dass unmittelbar nach dem Bestücken der drei Umverpackungen 20', 20", 20'" mit Artikeln 14 und bereits phasenweise vor oder nach dem Entkoppeln der einen Gruppe von Klappen 17 bereits eine weitere Gruppe mit Klappen 17 zum nachfolgenden Koppeln der zu bestückenden Umverpackungen 20 nachrückt.

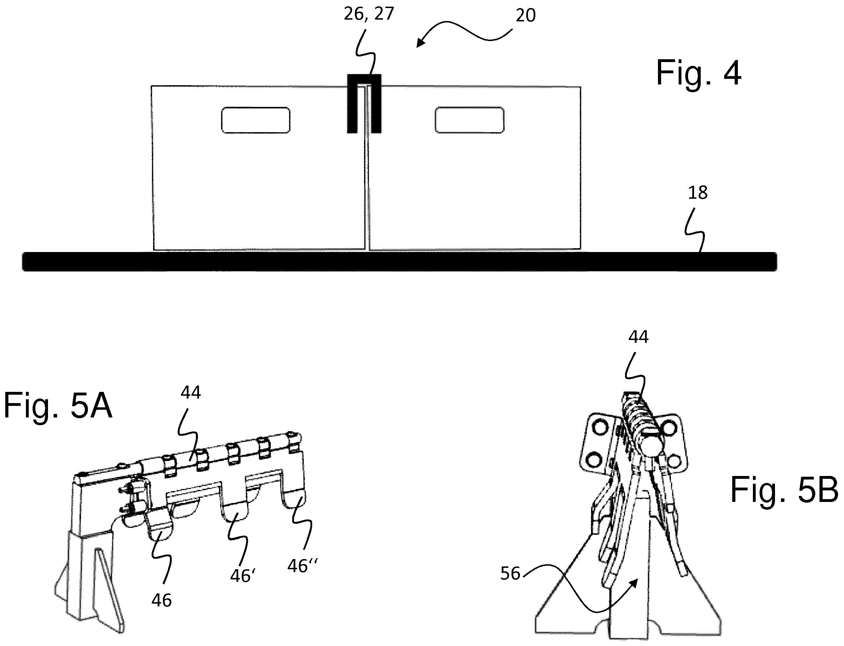

Die Fig. 4 zeigt in einer schematischen Seitenansicht zumindest zwei gekoppelte Umverpackungen 20 mittels eines Rückhalteelements 26, welches durch eine verschwenkbare Klappe 27 ausgebildet ist. Die verschwenkbare Klappe 27 stellt eine Aufnahme 56 bereit, welche vorzugsweise U-förmig ausgebildet ist.

Anhand der Fig. 4 wird deutlich, dass die U-förmige Aufnahme 56 der verschwenkten Klappe 27 jeweils die sich berührenden oder zugewandten Flächen bzw. Stirnseiten der zwei Umverpackungen 20 von oben aufnimmt bzw. umgreift, so dass dadurch die mindestens zwei Umverpackungen 20 zumindest phasenweise vor oder während des Bestückens der Umverpackungen 20 mit Artikeln 14 gekoppelt werden. Das Koppeln der zwei Umverpackungen 20 dient zugleich auch zur Zentrierung und Ausrichtung der zu bestückenden Umverpackungen 20.

Die Figuren 5A und 5B zeigen jeweils in einer schematischen Perspektivansicht eine Ausführungsform des Rückhalteelements 26 in Form einer verschwenkbaren Klappe 27. Die Klappe 27 umfasst einen länglichen Steg 44, von welchem sich beidseitig und beabstandet zueinander drei Laschen 46, 46', 46" symmetrisch erstrecken. Insbesondere erstrecken sich die Laschen 46, 46', 46" jeweils winkelig vom länglichen Steg 44, so dass eine V-förmige Aufnahme 56 ausgebildet wird. Das Verschwenken der Klappe 27 erfolgt mittels eines hier nicht dargestellten hydraulischen, elektrischen oder pneumatischen Zylinders.

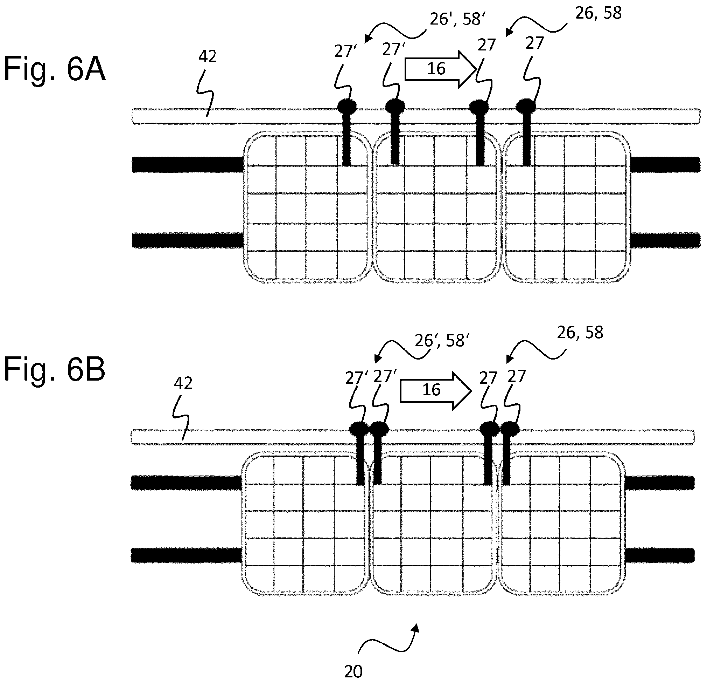

Die Figuren 6A und 6B zeigen ein weiteres Ausführungsbeispiel zur Koppelung der zu bestückenden Umverpackungen 20, wobei lediglich die zweite Förderstrecke 18 abgebildet ist. Einer Längsseite der zweiten Förderstrecke 18 und parallel zu dieser verlaufend ist eine Führungsschiene 42 zugeordnet, an welcher die Rückhalteelemente 26 in paralleler Ausrichtung entlang der Längsseite der zweiten Förderstrecke 18 verschiebbar oder insbesondere motorisch verschiebbar geführt ist.

Im Gegensatz zu der in Figuren 2 bis 5B gezeigten verschwenkbaren Klappe 27 sind die Rückhalteelemente 26, 26' bei vorliegendem Ausführungsbeispiel jeweils durch zwei Klappenpaare 58, 58' gebildet, die bei verschwenkter Position die zu bestückenden Umverpackungen 20 umgreifen und diese zumindest zwei Umverpackungen 20 miteinander sowie mit dem an der Führungsschiene 42 geführten Rückhalteelement 26, 26' koppelt, so dass die zumindest zwei gekoppelten Umverpackungen 20 gegenüber der Transportgeschwindigkeit der zweiten Förderstrecke 18 abgebremst und/oder zurückgehalten werden können bzw. abbremsbar und/oder zurückhaltbar sind.

Das Klappenpaar 58, 58' setzt sich aus zwei einzelnen Klappen 27, 27' zusammen, die unabhängig voneinander, vorzugsweise jedoch synchron zueinander verschwenkbar und/oder entlang der Führungsschiene 42 verschiebbar oder verfahrbar geführt sind.

Bei Erreichen der vordersten zu bestückenden Umverpackungen 20' haken sich die einzelnen Klappen 27, 27' des Klappenpaares 58, 58' jeweils von oben in eine Kante der zu bestückenden Umverpackungen 20 ein. Durch eine gegensinnige Zustellbewegung des Klappenpaares 58, 58' in und gegen Transportrichtung 16 werden die hintereinander beförderten und zu bestückenden Umverpackungen 20 für das Bestücken mit Artikeln 14 zentriert und ausgerichtet.

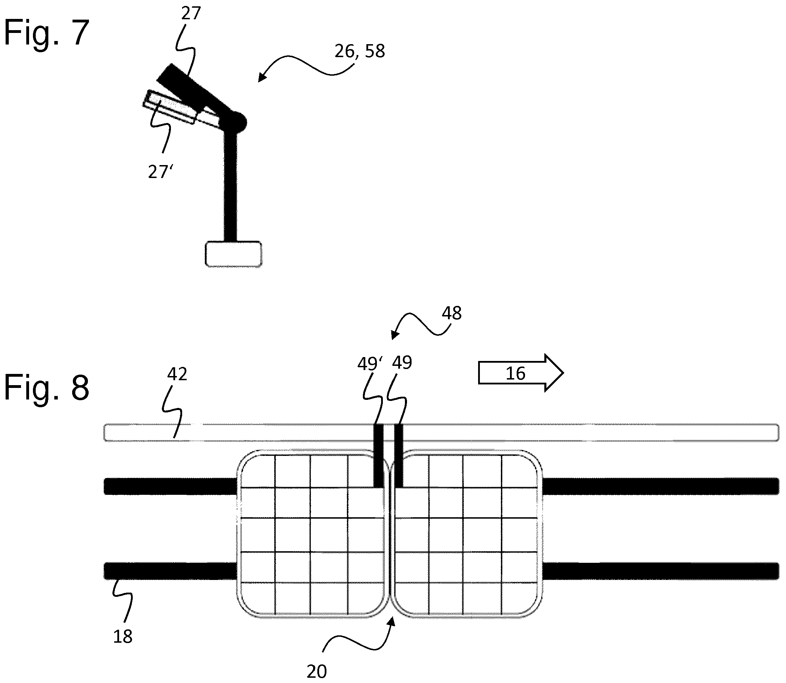

Die Fig. 7 zeigt das in den Figuren 6 verwendete Klappenpaar 58, welches sich aus zwei einzelnen Klappen 27, 27' zusammensetzt. Die zwei einzelnen Klappen 27 sind jeweils unabhängig voneinander, vorzugsweise jedoch synchron zueinander verschwenkbar und/oder entlang der Führungsschiene 42 verschiebbar geführt. Die einzelnen Klappen 27, 27' des Klappenpaares 58 sind jeweils L-förmig gebildet und vorzugsweise derart ausgebildet, dass sich diese von oben in die zu koppelnden Umverpackungen 20 eingreifen und insbesondere einhaken.

Die Fig. 8 zeigt in einer Detailansicht von oben eine weitere Ausführungsform der Handhabungs- und/oder Verpackungsvorrichtung 10, wobei lediglich die zweite Förderstrecke 18 abgebildet ist. Bei diesem Ausführungsbeispiel ist einer Längsseite der zweiten Förderstrecke 18 und parallel zu dieser verlaufend eine Führungsschiene 42 zugeordnet, an welcher die Rückhalteelemente 26 in paralleler Ausrichtung entlang der Längsseite der zweiten Förderstrecke 18 verschiebbar oder insbesondere motorisch verschiebbar geführt sind. Das Rückhalteelement 26 ist durch ein Paar Rückhaltestäben 48, 49, 49' gebildet, die in ausgefahrener Stellung senkrecht in Öffnungen der zwei zu bestückenden Umverpackungen 20 eingreifen und dadurch diese zumindest zwei benachbarte oder in Transportrichtung aufeinanderfolgende Umverpackungen 20 zumindest zeitlich vor oder während des Bestückens der Umverpackungen 20 mit Artikeln 14 miteinander koppelt, so dass die zumindest zwei gekoppelten Umverpackungen 20 gegenüber der Transportgeschwindigkeit der zweiten Förderstrecke 18 abgebremst und/oder zurückgehalten werden. Die einzelnen Rückhaltestäbe 49, 49' des Rückhaltestäbenpaares 48 greifen jeweils derart in Öffnungen der zwei zu bestückenden Umverpackungen 20 ein, dass diese jeweils unmittelbar in Transportrichtung 16 vor oder hinter der sich berührenden oder zugewandten Flächen und/oder Stirnseiten der zwei zu bestückenden und zu koppelnden Umverpackungen 20 angeordnet sind.

Nachdem die mittels den Rückhaltestäben 49, 49' gekoppelten Umverpackungen 20 mit Artikeln 14 vollständig bestückt sind, ziehen sich bzw. fahren die Rückhaltestäbe 49, 49' zurück, so dass die Koppelung der Umverpackungen 20 aufgehoben wird und die Umverpackungen 20 mit der Transportgeschwindigkeit der zweiten Förderstrecke 18 abtransportiert und/oder weitertransportiert werden. Das Verfahren der Rückhaltestäbe 49, 49' kann jeweils mittels hier nicht dargestellter pneumatischer, hydraulischer oder elektrischer Zylinder erfolgen.

In Fig. 8 ist lediglich ein Paar Rückhaltestäbe 48 vorgesehen, welches zwei Umverpackungen 20 koppelt. In der Praxis können jeweils mehrere Rückhalteelemente 26 in Form von einem Paar mit Rückhaltestäben 48 entlang der zweiten Förderstrecke 18 vorgesehen sein, welche jeweils die zu bestückenden Umverpackungen 20 koppeln, wobei die Anzahl an Rückhalteelementen 26 von der Anzahl an zu koppelnden Umverpackungen 20 abhängt.

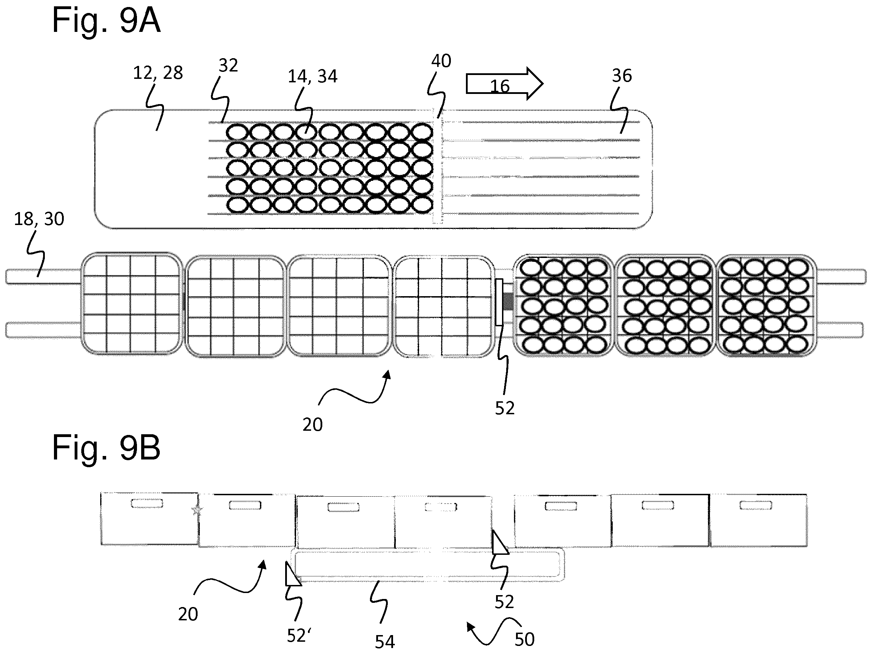

In den Figuren 9A und 9B ist jeweils eine alternative Handhabungs- und/oder Verpackungsvorrichtung 10 abgebildet, bei welcher die Ausbildung und Funktionsweise der ersten Förderstrecke 12 und der zweiten Förderstrecke 18 dem in Figuren 1 und 2 gezeigten Ausführungsbeispiel entsprechen. Dementsprechend werden Artikel 14 in einem Massenstrom auf einer die erste Förderstrecke 12 bildenden ersten Horizontalfördereinrichtung 28 in Transportrichtung 16 (hier von links nach rechts weisend; obere Förderstrecke) heranbefördert und in einen Eingriffs- und/oder Übernahmebereich 38 der Handhabungseinrichtung 22 befördert. Die zunächst im Massenstrom beförderten Artikel 14 können hierbei auf ihrem Förderweg bspw. mittels vertikal stehender Gassenbleche 32 oder auf andere Weise in Reihen von regelmäßig hintereinander beförderten Artikeln 14 aufgeteilt und zusammengeführt werden. Vorliegend werden durch die Gassenbelche 32 fünf parallele Einzelgassen 36 ausgebildet, innerhalb welcher die Artikel 14 jeweils ohne Abstand hintereinander befördert werden. Aus diesen insgesamt fünf parallelen Reihen 34 können mittels der entsprechend dimensionierten und auf die Reihenanzahl abgestimmten Greiferköpfe 24 der Handhabungseinrichtung 22 jeweils fünf Behälter 14 für jeden Kasten 20 entnommen werden, so dass jede Artikelgruppe insgesamt zwanzig Artikel 14 umfasst.

Auf einer parallel zur ersten Horizontalfördereinrichtung 28 der ersten Förderstrecke 12 verlaufenden zweiten Horizontalfördereinrichtung 36, welche die zweite Förderstrecke 18 bildet, werden in gleicher Transportrichtung 16 die mit Artikeln 14 zu bestückenden Umverpackungen 20 heranbefördert und wie die Artikel 14 in den Eingriffs- und/oder Übernahmebereich 38 der Handhabungseinrichtung 22 befördert, wo jede Umverpackung 20 je nach ihrer Aufnahmekapazität mit einer definierten Anzahl von Artikeln 14 (hier mit insgesamt 20 Artikeln 14) bestückt werden. Die Umverpackungen 20 werden auf der zweiten Horizontalfördereinrichtung 30 in Transportrichtung 16 in nur einer Reihe hintereinander befördert.

Um die mit Artikeln 14 zu bestückenden Umverpackungen 20 zurückzuhalten und/oder gegenüber der Transportgeschwindigkeit der zweiten Förderstrecke 18 zu verzögern, ist unterhalb der zweiten Förderstrecke 18 eine Rückhaltevorrichtung 50 vorgesehen. Die Rückhaltevorrichtung 50 umfasst zwei Rückhalteelemente 26 jeweils in Gestalt eines Rückhaltefingers 52, 52', welche an einer Fördereinrichtung 54 bspw. in Gestalt eines Förderbandes umlaufend bewegt werden. Um die zu bestückenden Umverpackungen 20 zurückzuhalten und/oder gegenüber der Transportgeschwindigkeit der zweiten Förderstrecke 18 zu verzögern, überragt zumindest einer der Rückhaltefinger 52 die zweite Förderstrecke 18 zumindest abschnittsweise, so dass die darauf beförderten und mit Artikeln 14 zu bestückenden Umverpackungen 20 an dem Rückhaltefinger 52 aufgestaut werden. Während des Bestückens der Umverpackungen 20 wird der Rückhaltefinger 52 in Transportrichtung 16 entlang der umlaufenden Fördereinrichtung 52, jedoch langsamer als die Transportgeschwindigkeit der zweiten Förderstrecke 18 bewegt, so dass die mit Artikeln 14 zu bestückenden Umverpackungen 20 zurückgehalten und/oder gegenüber der Transportgeschwindigkeit der zweiten Förderstrecke 18 verzögert werden.

Nach Bestücken der Umverpackungen 20 mit Artikeln 14 wird der eine Rückhaltefinger 52 unterhalb der zweiten Förderstrecke 18 bewegt, so dass die bestückten Umverpackungen 20 mit Transportgeschwindigkeit der zweiten Förderstrecke 18 weiterbewegt werden.

Während dessen wird der weitere Rückhaltefinger 52' unterhalb der zweiten Förderstrecke 18 und entgegen der Transportrichtung 16 der zweiten Förderstrecke 18 bewegt, so dass dieser zeitlich nach dem Bestücken der Umverpackungen 20 mit Artikeln 14 bereits die nachfolgenden zu bestückenden Umverpackungen 20 zurückhalten und/oder gegenüber der Transportgeschwindigkeit der zweiten Förderstrecke 18 verzögern kann.

Die Ausführungsformen, Beispiele und Varianten der vorhergehenden Absätze, die Ansprüche oder die folgende Beschreibung und die Figuren, einschließlich ihrer verschiedenen Ansichten oder jeweiligen individuellen Merkmale, können unabhängig voneinander oder in beliebiger Kombination verwendet werden. Merkmale, die in Verbindung mit einer Ausführungsform beschrieben werden, sind für alle Ausführungsformen anwendbar, sofern die Merkmale nicht unvereinbar sind.

Wenn auch im Zusammenhang der Figuren generell von "schematischen" Darstellungen und Ansichten die Rede ist, so ist damit keineswegs gemeint, dass die Figurendarstellungen und deren Beschreibung hinsichtlich der Offenbarung der Erfindung von untergeordneter Bedeutung sein sollen. Der Fachmann ist durchaus in der Lage, aus den schematisch und abstrakt gezeichneten Darstellungen genug an Informationen zu entnehmen, die ihm das Verständnis der Erfindung erleichtern, ohne dass er etwa aus den gezeichneten und möglicherweise nicht exakt maßstabsgerechten Größenverhältnissen der Artikel und/oder Teilen der Vorrichtung oder anderer gezeichneter Elemente in irgendeiner Weise in seinem Verständnis beeinträchtigt wäre. Die Figuren ermöglichen es dem Fachmann als Leser somit, anhand der konkreter erläuterten Umsetzungen des erfindungsgemäßen Verfahrens und der konkreter erläuterten Funktionsweise der erfindungsgemäßen Vorrichtung ein besseres Verständnis für den in den Ansprüchen sowie im allgemeinen Teil der Beschreibung allgemeiner und/oder abstrakter formulierten Erfindungsgedanken abzuleiten.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 10: Vorrichtung, Handhabungs- und/oder Verpackungsvorrichtung
- 12: erste Förderstrecke
- 14: Artikel, Behälter, Getränkebehälter
- 16: Transportrichtung
- 18: zweite Förderstrecke
- 20: Umverpackung, Kasten, Getränkekasten, Getränkekiste
- 20': vorderste bzw. erste Umverpackung
- 20": zweite Umverpackung
- 20'": dritte Umverpackung
- 20'"": vierte Umverpackung
- 22: Handhabungseinrichtung
- 24: Greiferkopf
- 26: Rückhaltelement
- 26': Rückhalteelement
- 27: Klappe
- 27': erste Klappe
- 27": zweite Klappe
- 27'": dritte Klappe
- 28: erste Horizontalfördereinrichtung
- 30: zweite Horizontalfördereinrichtung
- 32: Gassenblech
- 34: Reihe
- 36: Einzelgasse
- 38: Eingriffs- und/oder Übernahmebereich
- 40: Anlagebalken
- 42: Führungsschiene
- 42': Führungsschiene
- 44: Steg
- 46: Lasche
- 46': Lasche
- 46": Lasche
- 48: Paar von Rückhaltestäben
- 49: Rückhaltestab
- 49': Rückhaltestab
- 50: Rückhaltevorrichtung
- 52: Rückhaltefinger
- 52': Rückhaltefinger
- 54: Umlaufende Fördereinrichtung
- 56: Aufnahme
- 58: Klappenpaar
- 58': Klappenpaar
- 60: Positionserfassungseinrichtung

## Patentansprüche

1. Handhabungs- und/oder Verpackungsvorrichtung (10) zur Umverpackung von Artikelgruppen,
- mit einer ersten Förderstrecke (12) zum Transportieren einer Vielzahl von Artikeln (14) im Massenstrom und/oder in Reihentransport in einer definierten und/oder im Förderverlauf sich ändernden Förderrichtung,
- mit einer nahe der ersten Förderstrecke (12) befindlichen und/oder parallel zur ersten Förderstrecke (12) verlaufenden zweiten Förderstrecke (18) zum aufeinanderfolgenden Transportieren von zumindest zwei Umverpackungen (20), die für eine Aufnahme jeweils mindestens einer, aus mehreren Artikeln (14) gebildeten Artikelgruppe vorgesehen und vorbereitet sind,
- und mit einer den Förderstrecken zugeordneten Handhabungseinrichtung (22) mit wenigstens einem Greiferkopf (24), der zur gleichzeitigen Aufnahme und Erfassung jeweils einer Artikelgruppe von der ersten Förderstrecke (12), zu deren Überführung zur zweiten Förderstrecke (18) und zum Einsetzen der Artikelgruppe in eine der auf der zweiten Förderstrecke (18) beförderten Umverpackung (20) vorgesehen und ausgebildet ist oder zur gleichzeitigen Aufnahme und Erfassung jeweils einer Artikelgruppe aus den auf der zweiten Förderstrecke (18) beförderten Umverpackungen (20), zu deren Überführung zur ersten Förderstrecke (12) sowie zum Aufsetzen der Artikelgruppe auf die erste Förderstrecke (12),
wobei der zweiten Förderstrecke (12) mindestens ein Rückhaltelement (26) zugeordnet ist, wobei mittels des mindestens einen Rückhalteelements (26) zumindest zwei benachbarte oder in Transportrichtung (16) aufeinanderfolgende Umverpackungen (20) auf der zweiten Förderstrecke (18) zumindest phasenweise vor oder während des Bestückens der Umverpackungen (20) mit der Artikelgruppe oder der Entnahme der Artikelgruppe aus den Umverpackungen (20) miteinander gekoppelt sind bzw. koppelbar sind, und wobei die zumindest zwei gekoppelten Umverpackungen (20) auf der zweiten Förderstrecke (18) relativ gegenüber der Transportgeschwindigkeit der zweiten Förderstrecke (18) bewegt werden können und wobei zumindest einer Längsseite der zweiten Förderstrecke (18) und parallel zu dieser verlaufend eine Führungsschiene (42) zugeordnet ist, an der das mindestens eine Rückhalteelement (26) entlang wenigstens einer Längsseite der zweiten Förderstrecke (18) verschiebbar und/oder insbesondere motorisch verfahrbar geführt ist.

2. Handhabungs- und/oder Verpackungsvorrichtung nach Anspruch 1, wobei die zumindest zwei gekoppelten Umverpackungen (20) auf der zweiten Förderstrecke (18) zurückgehalten und/oder gegenüber der Transportgeschwindigkeit der zweiten Förderstrecke (18) verzögert werden können.

3. Handhabungs- und/oder Verpackungsvorrichtung nach Anspruch 1 oder 2, bei welcher beiden Längsseiten der zweiten Förderstrecke (18) und parallel zu dieser verlaufend jeweils eine Führungsschiene (42, 42') zugeordnet ist, an dem das mindestens eine Rückhalteelement (26) entlang beider Längsseiten der zweiten Förderstrecke (18) verschiebbar und/oder insbesondere motorisch verfahrbar geführt ist.

4. Handhabungs- und/oder Verpackungsvorrichtung nach einem der Ansprüche 1 bis 3, bei welcher die Führungsschiene (42) linear oder umlaufend ausgebildet ist.

5. Handhabungs- und/oder Verpackungsvorrichtung nach einem der vorherigen Ansprüche, bei welchem das mindestens eine Rückhalteelement (26) entlang der Führungsschiene (42) in Transportrichtung (16) und/oder entgegen der Transportrichtung (16) der zweiten Förderstrecke (18) verschiebbar und/oder verfahrbar geführt ist.

6. Handhabungs- und/oder Verpackungsvorrichtung nach einem der vorherigen Ansprüche, bei welcher das mindestens eine Rückhalteelement (26) durch eine verschwenkbare Klappe (27) oder durch ein verschwenkbares Klappenpaar (58) ausgebildet ist, welches bei verschwenkter Position die zu bestückenden oder zu entleerenden zumindest zwei Umverpackungen (20) umgreift und diese zumindest zwei Umverpackungen (20) miteinander sowie mit dem an der Führungsschiene (42) geführten Rückhalteelement (26) koppelt, so dass die zumindest zwei gekoppelten Umverpackungen (20) gegenüber der Transportgeschwindigkeit der zweiten Förderstrecke (18) abgebremst und/oder zurückgehalten werden können bzw. abbremsbar und/oder zurückhaltbar sind.

7. Handhabungs- und/oder Verpackungsvorrichtung nach einem der Ansprüche 1 bis 5, bei welcher das mindestens eine Rückhalteelement (26) durch ein Paar von Rückhaltestäben (48) gebildet ist, die in ausgefahrener Stellung senkrecht in Öffnungen der zu mindestens zwei bestückenden oder zu entleerenden Umverpackungen (20) eingreifen und dadurch diese zumindest zwei Umverpackungen (20) miteinander koppelt, so dass die zumindest zwei gekoppelten Umverpackungen (20) gegenüber der Transportgeschwindigkeit der zweiten Förderstrecke (18) abgebremst und/oder zurückgehalten werden.

8. Handhabungs- und/oder Verpackungsvorrichtung nach einem der vorherigen Ansprüche, welcher wenigstens eine Positionserfassungseinrichtung (60) zur Erkennung einer Position einer zu bestückenden oder zu entleerenden Umverpackung (20) und/oder zur Erfassung der Fördergeschwindigkeit dieser Umverpackung (20) zugeordnet ist.

9. Verfahren zum Überführen von im Massenstrom und/oder im Reihentransport beförderten Artikel auf einer ersten Förderstrecke (12) in kontinuierlich oder intermittierend entlang einer zweiten Förderstrecke (18) bewegte Umverpackungen (20), die jeweils mindestens eine aus mehreren Artikeln (14) gebildete Artikelgruppe aufnehmen, oder zum Überführen von in kontinuierlich und intermittierend entlang einer zweiten Förderstrecke (18) bewegte und in Umverpackungen (20) eingesetzte Artikelgruppen zum Massenstrom- oder Reihentransport auf einer ersten Förderstrecke (12), wobei das Verfahren mit einer Handhabungs- und/oder Verpackungsvorrichtung nach einem der Ansprüche 1 bis 8 durchgeführt wird und
- wobei jeweils mindestens eine Artikelgruppe aus dem Massenstrom und/oder dem Reihentransport mittels wenigstens eines Greiferkopfes (24) erfasst und herausgehoben und von oben in eine der sich neben dem Massenstrom oder dem Reihentransport der Artikel (14) entlang der Förderstrecke bewegenden Umverpackungen (20) eingesetzt wird, wonach die mit einer Artikelgruppe bestückten oder entleerten Umverpackungen (20) oder wobei jeweils mindestens eine Artikelgruppe aus den kontinuierlich oder intermittierend entlang einer zweiten Förderstrecke bewegte Umverpackungen (20) mittels wenigstens eines Greiferkopfes (24) erfasst und herausgehoben wird/werden und von oben auf die weitere Förderstrecke zum Massenstrom- oder Reihentransport aufgesetzt werden,
- wobei die mit einer Artikelgruppe mindestens zwei zu bestückenden oder zu entleerenden Umverpackungen (20) zumindest phasenweise vor oder während des Bestückens der Umverpackungen (20) mit der Artikelgruppe oder der Entnahme der Artikelgruppe aus den Umverpackungen (20) miteinander gekoppelt werden,
- und wobei die zumindest zwei gekoppelten Umverpackungen (20) auf der zweiten Förderstrecke (18) relativ gegenüber der Transportgeschwindigkeit der zweiten Förderstrecke (18) bewegt werden.

10. Verfahren nach Anspruch 9, bei welchem die miteinander gekoppelten Umverpackungen (20) zurückgehalten und gegenüber der Transportgeschwindigkeit von vorauslaufenden Umverpackungen (20) verzögert werden.

11. Verfahren nach Anspruch 9 oder 10, bei welchem das mindestens eine Rückhaltelement (26) zumindest phasenweise mit der Transportgeschwindigkeit entlang der zweiten Förderstrecke (18) mitbewegbar ist oder gegenüber dieser mit reduzierter Vorschubgeschwindigkeit mitbewegbar ist, wodurch die zumindest zwei gekoppelten Umverpackungen (20) gegenüber der Transportgeschwindigkeit der zweiten Förderstrecke (18) verzögert werden.

12. Verfahren nach einem der Ansprüche 9 bis 11, bei welcher die mindestens zwei Umverpackungen (20) durch das Koppeln für das anschließende Bestücken der Umverpackungen (20) mit einer Artikelgruppe oder Entnehmen der Artikelgruppe aus den Umverpackungen (20) zentriert und/oder ausgerichtet werden.

13. Verfahren nach einem der Ansprüche 9 bis 12, bei welchem eine Position einer zu bestückenden oder zu entleerenden Umverpackung (20) erkannt und/oder eine Fördergeschwindigkeit dieser Umverpackung (20) erfasst wird, wobei insbesondere in Abhängigkeit von den erfassten Signalen ein Ansteuerungssignal zum Koppeln der mindestens zwei Umverpackungen (20) erzeugbar und/oder generierbar ist.

## Claims

1. A handling and/or packaging device (10) for packaging groups of articles,
- with a first conveying section (12) for transporting a plurality of articles (14) in mass flow and/or in a series in a defined conveying direction and/or in a conveying direction which changes in the course of conveying,
- with a second conveying section (18) located close to the first conveying section (12) and/or running parallel to the first conveying section (12) for successively transporting at least two outer packages (20), which outer packages (20) are each provided and prepared for receiving at least one article group formed from a plurality of articles (14),
- and with a handling device (22) associated with the conveying sections and having at least one gripper head (24), which gripper head (24) is provided and designed for simultaneously gripping and seizing a respective group of articles from the first conveying section (12), transferring them to the second conveying section (18) and for inserting the group of articles into one of the outer packages (20) conveyed on the second conveying section (18), or for simultaneously gripping and seizing in each case one group of articles from the outer packages (20) conveyed on the second conveying section (18), for transferring them to the first conveying section (12) and for placing the group of articles onto the first conveying section (12),
wherein at least one retaining element (26) is associated with the second conveying section (18), wherein by means of the at least one retaining element (26) at least two adjacent outer packages (20) or at least two outer packages (20) successively arranged in transport direction (16) are coupled or can be coupled to one another on the second conveying section (18) at least in phases before or during the loading of the outer packages (20) with the group of articles or the removal of the group of articles from the outer packages (20), and wherein the at least two coupled outer packages (20) can be moved on the second conveying section (18) relative to the transport speed of the second conveying section (18) and wherein a guide rail (42) is associated with at least one longitudinal side of the second conveying section (18) and running parallel thereto, on which guide rail (42) the at least one retaining element (26) is guided so as to be displaceable and/or, in particular, so as to be movable by motor along at least one longitudinal side of the second conveying section (18).

2. The handling and/or packaging device according to claim 1, wherein the at least two coupled outer packages (20) can be retained on the second conveying section (18) and/or can be decelerated relative to the transport speed of the second conveying section (18).

3. The handling and/or packaging device according to claim 1 or 2, in which a guide rail (42, 42') is associated with each of the two longitudinal sides of the second conveying section (18) and running parallel thereto, on which guide rail (42, 42') the at least one retaining element (26) is guided so as to be displaceable along both longitudinal sides of the second conveying section (18) and/or in particular so as to be movable by motor.

4. The handling and/or packaging device according to one of the previous claims 1 to 3, in which the guide rail (42) is designed to be linear or circumferential.

5. Handling and/or packaging device according to one of the previous claims, in which the at least one retaining element (26) is guided displaceably and/or movably along the guide rail (42) in the transport direction (16) and/or against the transport direction (16) of the second conveying section (18).

6. The handling and/or packaging device according to one of the previous claims, in which the at least one retaining element (26) is formed by a pivotable flap (27) or by a pivotable pair of flaps (58), which, in the pivoted position, engages around the at least two outer packages (20) to be loaded or emptied and couples these at least two outer packages (20) to one another and to the retaining element (26) guided on the guide rail (42), so that the at least two coupled outer packages (20) can be decelerated and/or retained with respect to the transport speed of the second conveying section (18) or are decelerable and/or retainable.

7. The handling and/or packaging device according to one of the claims 1 to 5, wherein the at least one retaining element (26) is formed by a pair of retaining rods (48), which retaining rods (48) in the extended position engage perpendicularly in openings of the at least two outer packages (20) to be loaded or emptied, thereby coupling these at least two outer packages (20) to one another, so that the at least two coupled outer packages (20) are decelerated and/or retained relative to the transport speed of the second conveying section (18).

8. The handling and/or packaging device according to one of the previous claims, with which at least one position detection device (60) is associated for detecting a position of an outer package (20) to be loaded or emptied and/or for detecting the conveying speed of this outer package (20).

9. A method of transferring articles conveyed in mass flow and/or in series on a first conveying section (12) into outer packages (20), which outer packages (20) are moved continuously or intermittently along a second conveying section (18), and which outer packages (20) each receive at least one group of articles formed from a plurality of articles (14), or for transferring groups of articles for transport on a first conveying section (12) in mass flow or series, which groups of articles are moved continuously and intermittently along a second conveying section (18), which groups of articles are inserted into outer packages (20), wherein the method is carried out with a handling and/or packaging device according to one of the claims 1 to 8 and
- wherein in each case at least one group of articles is seized and lifted out of the mass flow and/or the row transport by means of at least one gripper head (24) and is inserted from above into one of the outer packages (20), which outer package (20) is moving alongside the mass flow or the row transport of the articles (14) beside the conveying section, after which the outer packages (20), which outer packages (20) are loaded with an article group or emptied, or after which in each case at least one article group is/are seized and lifted out of the outer packages (20) by means of at least one gripper head (24), which outer packages (20) are moving continuously or intermittently along a second conveying section, and is being placed from above onto the further conveying section for mass flow or row transport,
- wherein the at least two the outer packages (20) to be loaded with or emptied of at least one group of articles are coupled to one another at least in phases before or during the loading of the outer packages (20) with the group of articles or the removal of the group of articles from the outer packages (20),
- and wherein the at least two coupled outer packages (20) are moved on the second conveying section (18) relative to the transport speed of the second conveying section (18).

10. The method of claim 9, wherein the outer packages (20) coupled to one another are retained and decelerated relative to the transport speed of leading outer packages (20).

11. The method according to claim 9 or 10, in which the at least one retaining element (26) can be moved at least in phases with the transport speed along with the second conveying section (18) or can be moved with a reduced feeding speed relative to the latter, as a result of which the at least two coupled outer packages (20) are decelerated relative to the transport speed of the second conveying section (18).

12. The method of one of the claims 9 to 11, wherein the at least two outer packages (20) are centered and/or aligned by the coupling for subsequent loading of the outer packages (20) with an article group or removal of the article group from the outer packages (20).

13. The method according to one of the claims 9 to 12, in which a position of an outer package (20) to be loaded or emptied is detected and/or in which a conveying speed of this outer package (20) is detected, wherein in particular a drive signal for coupling the at least two outer packages (20) as a function of the detected signals is produced and/or generated.

## Revendications

1. Dispositif de manipulation et/ou d'emballage (10) destiné à l'emballage supplémentaire de groupes d'articles,
- avec un premier trajet de transport (12) pour transporter une pluralité d'articles (14) en flux de masse et/ou en transport en série dans une direction de transport définie et/ou changeant au cours du transport,
- avec un deuxième trajet de transport (18) qui est situé à proximité du premier trajet de transport (12) et/ou s'étend parallèlement au premier trajet de transport (12) et est destiné à transporter successivement au moins deux emballages supplémentaires (20) qui sont prévus ou préparés chacun pour recevoir au moins un groupe d'articles formé de plusieurs articles (14),
- et avec un dispositif de manipulation (22) qui est associé aux trajets de transport et comprend au moins une tête de préhension (24) qui est prévue et conçue pour recevoir et saisir en même temps respectivement un groupe d'articles du premier trajet de transport (12), pour faire passer celui-ci vers le deuxième trajet de transport (18) et pour insérer le groupe d'articles dans l'un des emballages supplémentaires (20) transportés sur le deuxième trajet de transport (18), ou pour recevoir et saisir en même temps respectivement un groupe d'articles des emballages supplémentaires (20) transportés sur le deuxième trajet de transport (18), pour faire passer celui-ci vers le premier trajet de transport (12) ainsi que pour poser le groupe d'articles sur le premier trajet de transport (12),
dans lequel au moins un élément de retenue (26) est associé au deuxième trajet de transport (18), dans lequel au moins deux emballages supplémentaires (20) adjacents ou se succédant dans la direction de transport (16) sur le deuxième trajet de transport (18) sont ou bien peuvent être couplés l'un à l'autre, au moins par phases, au moyen dudit au moins un élément de retenue (26), avant ou pendant que les emballages supplémentaires (20) sont équipés du groupe d'articles ou que le groupe d'articles est retiré des emballages supplémentaires (20), et dans lequel lesdits au moins deux emballages supplémentaires (20) couplés sur le deuxième trajet de transport (18) peuvent être déplacés par rapport à la vitesse de transport du deuxième trajet de transport (18) et dans lequel un rail de guidage (42) est associé à au moins un côté longitudinal du deuxième trajet de transport (18), tout en s'étendant parallèlement à celui-ci, sur lequel ledit au moins un élément de retenue (26) est guidé de manière à pouvoir coulisser et/ou à pouvoir être déplacé en particulier par moteur le long d'au moins un côté longitudinal du deuxième trajet de transport (18).

2. Dispositif de manipulation et/ou d'emballage selon la revendication 1, dans lequel lesdits au moins deux emballages supplémentaires (20) couplés peuvent être retenus sur le deuxième trajet de transport (18) et/ou être retardés par rapport à la vitesse de transport du deuxième trajet de transport (18).

3. Dispositif de manipulation et/ou d'emballage selon la revendication 1 ou 2, dans lequel respectivement un rail de guidage (42, 42') est associé aux deux côtés longitudinaux du deuxième trajet de transport (18), tout en s'étendant parallèlement à celui-ci, sur lequel ledit au moins un élément de retenue (26) est guidé de manière à pouvoir coulisser et/ou à pouvoir être déplacé en particulier par moteur le long des deux côtés longitudinaux du deuxième trajet de transport (18).

4. Dispositif de manipulation et/ou d'emballage selon l'une quelconque des revendications 1 à 3, dans lequel le rail de guidage (42) est conçu de manière linéaire ou circonférentielle.

5. Dispositif de manipulation et/ou d'emballage selon l'une quelconque des revendications précédentes, dans lequel ledit au moins un élément de retenue (26) est guidé de manière à pouvoir coulisser et/ou à pouvoir être déplacé le long du rail de guidage (42) dans la direction de transport (16) et/ou à l'encontre de la direction de transport (16) du deuxième trajet de transport (18).

6. Dispositif de manipulation et/ou d'emballage selon l'une quelconque des revendications précédentes, dans lequel ledit au moins un élément de retenue (26) est formé par un volet pivotant (27) ou par une paire de volets pivotant (58) qui, lorsqu'elle est en position pivotée, se prend autour desdits au moins deux emballages supplémentaires (20) à équiper ou à vider et couple ces au moins deux emballages supplémentaires (20) les uns aux autres ainsi qu'à l'élément de retenue (26) guidé sur le rail de guidage (42) de sorte que lesdits au moins deux emballages supplémentaires (20) couplés sont aptes à être freinés et/ou retenus ou bien peuvent être freinés et/ou retenus par rapport à la vitesse de transport du deuxième trajet de transport (18).

7. Dispositif de manipulation et/ou d'emballage selon l'une quelconque des revendications 1 à 5, dans lequel ledit au moins un élément de retenue (26) est formé par une paire de tiges de retenue (48) qui, lorsqu'elles sont en position sortie, s'engagent perpendiculairement dans des ouvertures desdits au moins deux emballages supplémentaires à équiper ou à vider, couplant ainsi les uns aux autres lesdits au moins deux emballages supplémentaires (20), de sorte que lesdits au moins deux emballages supplémentaires (20) couplés sont freinés et/ou retenus par rapport à la vitesse de transport du deuxième trajet de transport (18).

8. Dispositif de manipulation et/ou d'emballage selon l'une quelconque des revendications précédentes, auquel est associé au moins un dispositif de détection de position (60) pour détecter une position d'un emballage supplémentaire (20) à équiper ou à vider et/ou pour détecter la vitesse de transport de cet emballage supplémentaire (20).

9. Procédé de transfert d'articles transportés en flux de masse et/ou en transport en série sur un premier trajet de transport (12) dans des emballages supplémentaires (20) qui sont déplacés en continu ou par intermittence le long d'un deuxième trajet de transport (18) et qui reçoivent chacun au moins un groupe d'articles formé d'une pluralité d'articles (14), ou de transfert de groupes d'articles qui sont déplacés en continu et par intermittence le long d'un deuxième trajet de transport (18) et insérés dans des emballages supplémentaires (20) pour un transport en flux de masse ou en série sur un premier trajet de transport (12), dans lequel le procédé est effectué avec un dispositif de manipulation et/ou d'emballage selon l'une quelconque des revendications 1 à 8 et
- dans lequel au moins un groupe d'articles du flux de masse et/ou du transport en série est saisi et soulevé au moyen d'au moins une tête de préhension (24) et est inséré d'en haut dans l'un des emballages supplémentaires (20) qui se déplace à côté du flux de masse ou du transport en série des articles (14) le long du trajet de transport, ce après quoi les emballages supplémentaires (20) équipés d'un groupe d'articles ou vidés ou dans lequel respectivement au moins un groupe d'articles des emballages supplémentaires (20) déplacés en continu ou par intermittence le long d'un deuxième trajet de transport est/sont saisi(s) et soulevé(s) au moyen d'au moins une tête de préhension (24) et sont posés d'en haut sur l'autre trajet de transport pour un transport en flux de masse ou en série,
- dans lequel lesdits au moins deux emballages supplémentaires (20) à équiper d'un groupe d'articles ou à vider sont couplés les uns aux autres, au moins par phases, avant ou pendant que les emballages supplémentaires (20) sont équipés du groupe d'articles ou que le groupe d'articles est retiré des emballages supplémentaires (20),
- et dans lequel lesdits au moins deux emballages supplémentaires (20) couplés sur le deuxième trajet de transport (18) sont déplacés par rapport à la vitesse de transport du deuxième trajet de transport (18).

10. Procédé selon la revendication 9, dans lequel les emballages supplémentaires (20) couplés les uns aux autres sont retenus et sont retardés par rapport à la vitesse de transport d'emballages supplémentaires (20) se trouvant en amont.

11. Procédé selon la revendication 9 ou 10, dans lequel ledit au moins un élément de retenue (26) peut être déplacé au moins par phases à la vitesse de transport le long du deuxième trajet de transport (18) ou peut être déplacé par rapport à celui-ci à une vitesse d'avance réduite, ce par quoi lesdits au moins deux emballages supplémentaires (20) couplés sont retardés par rapport à la vitesse de transport du deuxième trajet de transport (18).

12. Procédé selon l'une quelconque des revendications 9 à 11, dans lequel lesdits au moins deux emballages supplémentaires (20) sont centrés et/ou alignés par le couplage pour équiper ensuite les emballages supplémentaires (20) d'un groupe d'articles ou pour retirer le groupe d'articles des emballages supplémentaires (20).

13. Procédé selon l'une quelconque des revendications 9 à 12, dans lequel une position d'un emballage supplémentaire (20) à équiper ou à vider est détectée et/ou une vitesse de transport de cet emballage supplémentaire (20) est détectée, dans lequel un signal de commande pour le couplage desdits au moins deux emballages supplémentaires (20) peut être produit et/ou généré en particulier en fonction des signaux détectés.
